(19) **Europäisches Patentamt / European Patent Office / Office européen des brevets**

(11) **EP 1 385 118 B1**

(12) **EUROPEAN PATENT SPECIFICATION**

(45) Date of publication and mention
of the grant of the patent:
**07.10.2009 Bulletin 2009/41**

(51) Int Cl.:
***G06K 9/00*** *(2006.01)*

(21) Application number: **03291304.8**

(22) Date of filing: **30.05.2003**

(54) **Method and apparatus for supporting a biometric registration performed on a card**

Verfahren und Vorrichtung zum Unterstützen einer biometrischen Registrierung, die auf einer Karte ausgeführt wird

Procédé et appareil pour faciliter un enregistrement biométrique effectué sur une carte

(84) Designated Contracting States:
**AT BE BG CH CY CZ DE DK EE ES FI FR GB GR HU IE IT LI LU MC NL PT RO SE SI SK TR**

(30) Priority: **30.05.2002 US 157120**
**14.04.2003 US 412348**

(43) Date of publication of application:
**28.01.2004 Bulletin 2004/05**

(73) Proprietor: **ACTIVCARD IRELAND LIMITED**
**Dublin 2 (IE)**

(72) Inventors:
• **Hillhouse, Robert D.**
**Ottawa,**
**Ontario K1Y 0X6 (CA)**

• **Hamid, Laurence**
**Ottawa,**
**Ontario K4A 1Z3 (CA)**

(74) Representative: **Grünecker, Kinkeldey, Stockmair & Schwanhäusser Anwaltssozietät**
**Leopoldstrasse 4**
**80802 München (DE)**

(56) References cited:
**EP-A- 0 680 004       WO-A-01/84494**
**WO-A-01/90962       WO-A-03/003286**

**Description**

**Field of the Invention**

The invention relates to a method of identifying an individual by comparing biometric information of the individual with reference data that is carried on a token, and more particularly to a method of identifying an individual in which the comparison is performed on a processor of the token.

**Background of the invention**

Magnetic strip cards have been widely used for controlling access by individuals to information, rooms and financial transaction instruments. Typically, the individual must "swipe" the card through a magnetic strip reader and provide a personal identification number (PIN) in order to be identified as an authorized user of the card. This system suffers from several disadvantages, including the tendency of individuals to forget an assigned PIN number, or to seriously compromise the security of an assigned PIN number by writing it down in close proximity to the card. Similarly, individuals have a tendency to select PIN numbers that are easily remembered and that often have a personal significance, such as a birth date, which PIN numbers are easily guessed by an unauthorized individual. Accordingly, magnetic strip cards are convenient, but do not provide a high level of security.

Tokens, such as for instance a smart card having a microprocessor and a memory, are being used increasingly for controlling access to information, buildings and financial transactions. Typically, the smart card has stored within its memory a biometric information sample of the authorized user of the smart card, for instance a fingerprint image. When the authorized user of the smart card desires access to an area or to information, the user provides a biometric information sample in the form of a fingerprint for comparison with the stored fingerprint image, and if a match is determined, the user is identified and access is granted. Unfortunately, the processors that are provided on such smart cards are relatively slow and generally unsuitable for performing the types of floating point calculations that are necessary in order to, for example, rotate and process fingerprint image data.

One approach to reducing the processing requirements of the smart card processor is to do some of the image processing for use in biometric recognition in a first host processor and then to pass the processed data to the smart card for a final stage of recognition. Such an approach is discussed in patent application WO 01/11577 assigned to Precise Biometrics and in patent application WO 01/84494, also assigned to Precise biometrics. In these references, a method is disclosed wherein a processor external to the smart card pre-processes biometric information to extract therefrom a small subset of the biometric information - a portion of an image of a fingerprint - in order to reduce the amount of processing required on the smart card processor.

In patent application WO 01/11577, it is disclosed to transmit this subset of biometric information in the place of the PIN that is commonly used to access information stored on a smart card. In reality, the subset of biometric information becomes the new "PIN" and is merely a larger PIN that is more difficult to guess. That said, once the PIN is guessed successfully, security of the smart card is compromised and the device and method are rendered useless.

Also, the use of a subset of, for example, a fingerprint image as a PIN is difficult. Fingerprints and other biometric information sources are not truly repeatable in nature. A fingertip may be dryer or wetter. It may be more elastic or less. It may be scratched or dirty or clean. Each of the above listed conditions affects the fingerprint image and, as such, means that the image subset may very well differ. Typical PIN analysis requires provision of the unique and static PIN. Here, such a method will result in a system that is very inconvenient to use.

In patent application WO 01/84494, it is disclosed to transmit to the first host processor a portion of the stored biometric information sample for use in alignment and subset extraction. Then, when the subset is provided to the smart card, it is already pre-processed and only a small portion of the original data sensed from the biometric information sample of the authorized user requires processing. The reduced amount of data for processing by the smart card processor results in a reduced processing time and, as such, enhances performance. Unfortunately, once the subset is guessed successfully or intercepted, security of the smart card is compromised and the device and method are rendered useless.

Furthermore, although there is little correlation between an individual and the fingerprints they are born with, there is within a single fingerprint a significant amount of correlation. The same is true of irises, retina, faces, and so forth. Taking a face as an easily illustrated example, it is easy to verify that most people fall within a norm of values for certain facial features given other facial features. For example, given a placement of one eye, the other eye is usually within an easily estimated range of locations, orientations and colors. The same is true for fingerprints, in that once you have a fingerprint image that is missing a small rectangular area, the randomness of what is in the missing area is changed from the randomness of fingerprint assignment to a much lesser randomness allowing for guessing of features therein with more likelihood of success. As such, security is greatly compromised by the method described *supra*.

Another drawback to the prior art method is that it makes public a large portion of the biometric data and, as such, renders updates or improvements to user identification processes limited to operation on those private areas of the biometric data. This too is a significant drawback.

It is an object to provide a method of identifying an individual that overcomes the limitations of the prior art.

**Summary of the Invention**

The invention is defined in independent claims 1 and 42-45.

**Brief Description of the Drawings**

The invention will now be described with reference to the attached drawings in which:

Figure 1 is a simplified flow diagram of a prior art method of performing fingerprint identification;
Figure 2 is a simplified flow diagram of a prior art method of preprocessing a fingerprint image;
Figure 3 is a simplified flow diagram of a method of preprocessing a fingerprint image according to another embodiment of the instant invention;
Figure 4 is a schematic representation of a biometric fingerprint template;
Figure 5 is a simplified flow diagram of a method of preprocessing a fingerprint image according to another embodiment of the instant invention;
Figure 6 is a simplified flow diagram of a method of preprocessing a fingerprint image according to another embodiment of the instant invention;
Figure 6a is an example of three feature locations allowing for three orientations of an image;
Figure 7 is a simplified flow diagram of a method of preprocessing a fingerprint image according to another embodiment of the instant invention;
Figure 8 is a simplified flow diagram of a method of preprocessing a fingerprint image according to another embodiment of the instant invention;
Figure 9 is a simplified flow diagram of a method of preprocessing a fingerprint image according to another embodiment of the instant invention;
Figure 10 is a simplified flow diagram of a method of preprocessing a fingerprint image according to another embodiment of the instant invention;
Figure 11 is a simplified flow diagram of a method of preprocessing a fingerprint image according to another embodiment of the instant invention;
Figure 12 is a simplified flow diagram of a method of preprocessing a fingerprint image according to another embodiment of the instant invention.
Figure 13 depicts a schematic diagram of a prior art apparatus for use with the method according to the instant invention;
Figure 14 shows a flow chart illustrating a prior art method of biometric data alignment; and,
Figure 15 is a simplified flow diagram illustrating a method according to the instant invention for hashing biometric data.

**Detailed Description of the Invention**

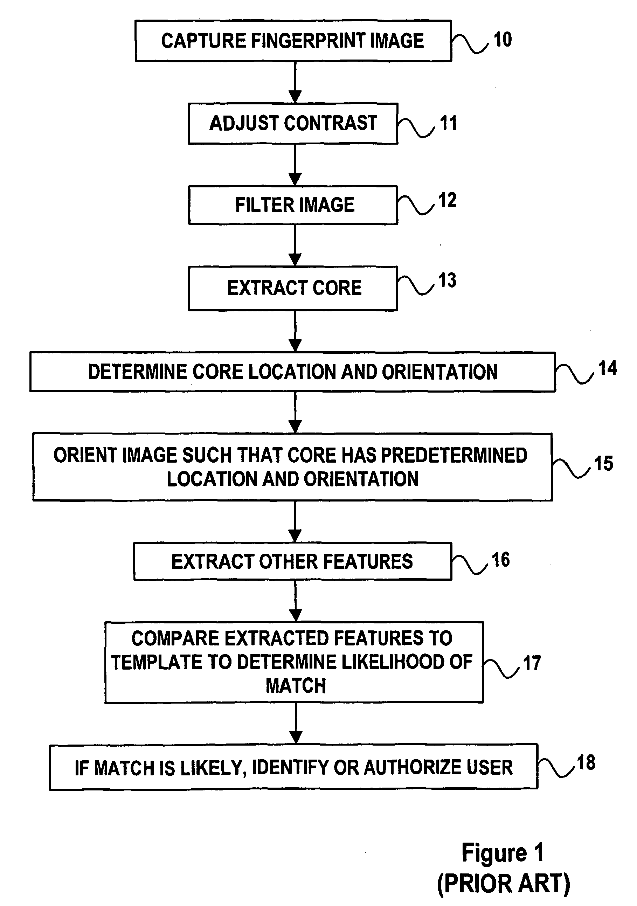

Referring to Figure 1, a prior art method of performing fingerprint identification is shown. A fingerprint is imaged in steps 10. The image is then filtered using image processing filtering techniques in step 12 and the contrast is adjusted to a normalized level in step 11. Once pre-processing of the image is completed, the image is in a standardized form for analysis.

The image is then analyzed in step 13 to determine a core feature or features. This feature is used to align the image in space and orientation in step 14 in order to allow for more accurate correlation with template data. Once oriented in step 15, the image is analyzed and features are identified for use in correlation in step 16. The features are compared to features in a stored template to determine a likelihood of a match in step 17. When a match is likely, a user identification or authorization is performed in step 18.

Though capturing of biometric image data is not an exact process and, as such, variations in the captured image often occur, feature alignment is a very likely cause of registration inaccuracies and variations. Thus, two images that are of an identical biometric information source and that contain identical information offset one from another in translation and rotation may not register exactly one against another. This results from small differences in image alignment even once image orientation has occurred.

Much of the processing that occurs during the analysis of the fingerprint is related to re-orienting the fingerprint for easier correlation and to feature identification.

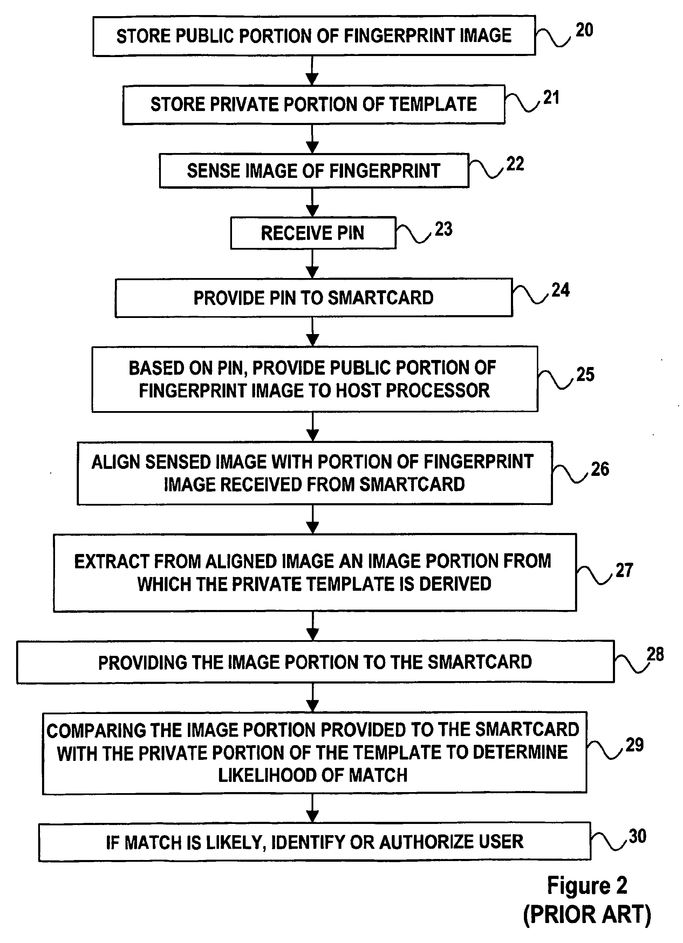

Referring now to Figure 2, shown is a prior art method of preprocessing a fingerprint image wherein biometric data is provided to the preprocessor from the smartcard in the form of a public portion of a template. For example, during a registration step (not shown), an authorized user of the smart card provides a fingertip having a fingerprint to an imaging device that is in communication with the smart card. The imaging device senses the topological features of the fingerprint and stores an image of the fingerprint template in memory of the smart card. The memory includes a public access portion for storing a public portion of the fingerprint image in step 20 and a private access portion for storing a private portion of the fingerprint image in step 21.

When the authorized user of the smart card wishes to be identified or recognized, the same fingertip is provided to an imaging device in step 22 of a host system in communication with the smart card, the fingerprint is imaged and stored electronically in a memory of the host system. The user provides a PIN to the host system in step 23 and the PIN is provided from the host system to the smart card in step 24. In dependence upon the PIN being verified, the smart card provides the public portion of the fingerprint image to a processor of the host system in step 25. The host processor aligns the sensed fingerprint image with the public portion of the fingerprint image that was provided from the smart card in step 26. The host processor then extracts from the aligned image an image portion from which the private template is derived in step 27. The image portion is provided to the smart card in step 28, where the smart card processor compares the image portion with the private portion of the template to determine a likelihood of a match in step 29. If a match is likely, the user is identified or recognized in step 30. If a match is other than likely, then the authorization attempt is rejected and the user is denied access.

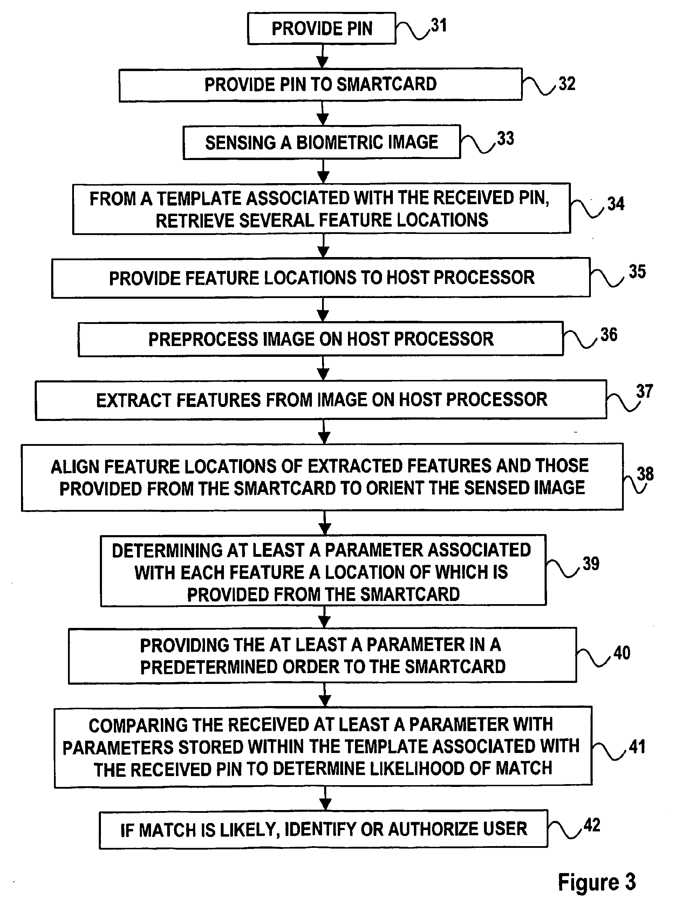

Referring now to Figure 3, a method of preprocessing a fingerprint image according to the instant invention is shown, wherein biometric data is not provided to a preprocessor, for instance a processor of a host system, from the smart card. As such, the process is alterable without suffering the drawbacks of the prior art methods. Further, as noted above, when fingerprint image data is provided from the smartcard, this reduces the security of the fingerprint registration system since correlation data is determinable from the data received from the smart card.

The user provides in step 31 a PIN to a host computer system in communication with the smart card, and the host computer provides the PIN to the smart card in step 32. Next, a fingerprint image of the user is captured using an imaging device of the host system in step 33. The image is filtered and the contrast is adjusted to a normalized level. The fingerprint image is then analyzed by the host processor to determine features thereof. Typically features of fingerprints include ridge flow angle, minutia locations, minutia types, minutia directions, core location, core orientation, and so forth. Of course, in order for any of the features to have meaning, they all must be related to a global position; this global position and orientation is often related to the core location and orientation.

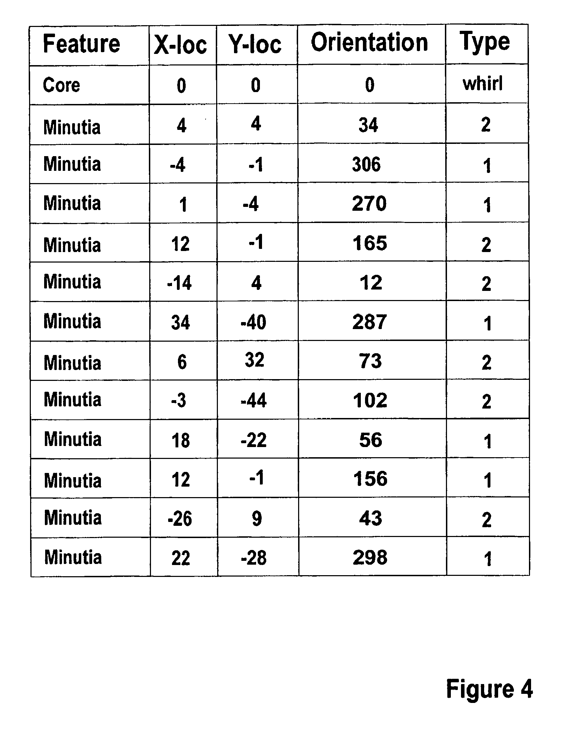

Thus, a typical biometric fingerprint template appears as shown in the diagram of Figure 4. Of course, other data formats and orders are possible. Further, it is possible to store the data in any form that allows extraction of the same information therefrom. For example, each minutia may be stored relative to a previous minutia without changing the information content of the template.

As is evident from Figure 4, the core is arbitrarily assigned the coordinate (0,0). The core orientation is assumed to be in the Y direction. The minutia are listed in order of distance from the core. About the core the minutia are denser than at a distance therefrom. The template of Figure 4 has 24 minutia listed. Though this is the case, often fingerprint analysis and recognition systems use far fewer minutia to perform an identification process.

Each minutia has a location expressed as a coordinate, has a direction expressed as an angle or as a slope, and has a type expressed in the template shown by a numeric identifier, each number indicative of a particular predetermined minutia type.

There is also an identifier indicating the fingerprint type, and the ridge flow angle at several locations. Of course other features are also known and could be extracted from a fingerprint image and stored within the template for later identification.

Thus, as noted with reference to Figure 1, the main processing tasks in biometric registration include, image processing to filter the image and, when necessary, scale and normalize the image; global feature identification; image rotation and translation relative to the global feature; feature extraction from the image; feature analysis and identification; feature correlation with template features. Of course when the template is an image, the step of feature analysis and identification is unnecessary and the step of correlation is more complex or less reliable.

Of the steps outlined above, feature correlation is the least processor intensive while global feature identification, image rotation, and feature extraction are the most processor intensive. That said, these are the processes that are typically performed by the correlating processor since only that processor has available thereto the data necessary for performing such a correlation.

Returning to Figure 3, the method provides for provision of challenge data relating to a template, the data other than image data of a biometric information source. For instance, in step 34 the smart card retrieves from the smart card memory a stored template that is associated with the received PIN, and retrieves a plurality of feature locations from the template. Of course, the feature locations need not be stored within the template. The plurality of locations is of identifiable features, preferably features having accurately identifiable locations.

A processor of the host system receiving in step 35 the challenge and an image of a biometric information source then uses the challenge data to orient the biometric information source relative thereto in step 36. This is performed by identifying features within the image in step 37, determining feature locations in step 38, and then moving the feature locations to overlap the provided locations in step 39 until a reasonable approximation of image positioning is achieved.

Once the image positioning is achieved, data relating to a plurality of features within the image are provided to the card for correlation in step 40. For example, the data relates to the 12 minutia nearest the first point provided.

Thus the processor of the smart card need only compare a plurality of values to values within the template stored thereon in step 41 in order to form a registration measure for use in user authorization. Preferably, the comparison is not a fixed comparison to allow for missed minutia or extra minutia within a template. If a match is likely, the user is identified or recognized in step 42. If a match is other than likely, then the authorization attempt is rejected and the user is denied access.

Since feature locations are provided from the smartcard for aligning the image, it is possible to provide features at a significant distance one from another. As is known to those of skill in the art of image processing, the longer the distance between two points to be aligned, the more accurate the rotational alignment. Of course a third point is needed to differentiate between 180 degree rotations. Thus, by selecting feature locations at a distance one from another, the alignment accuracy is improved relative to alignment of image data based on a single feature - core - and its orientation.

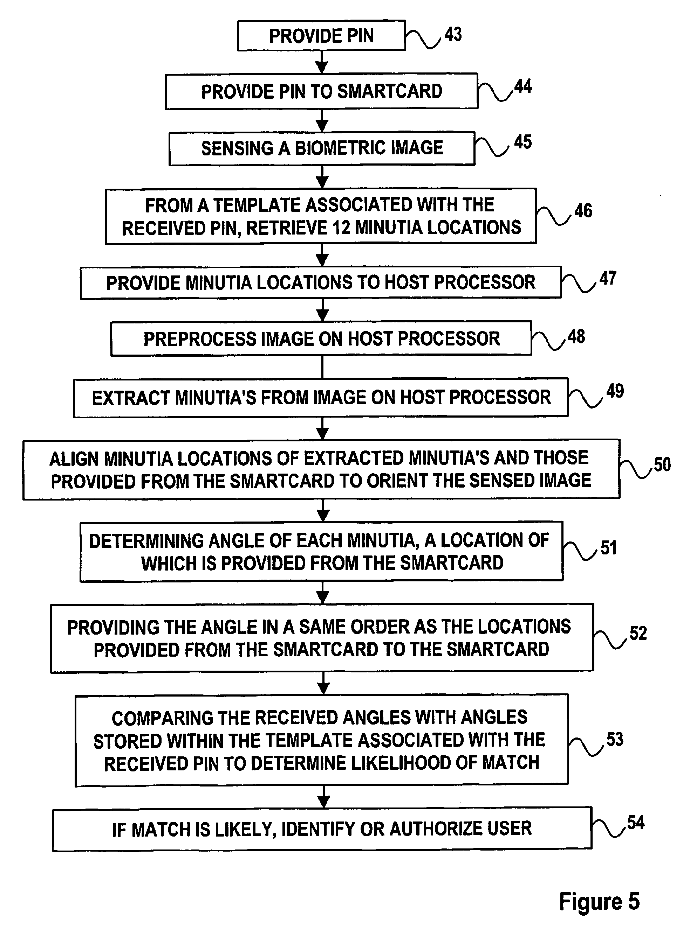

Referring to Figure 5, a more specific embodiment of the method of Figure 3 is shown. The user provides in step 43 a PIN to a host computer system in communication with the smart card, and the host computer provides the PIN to the smart card in step 44. Next, a fingerprint image of the user is captured using an imaging device of the host system in step 45. The smart card retrieves 12 minutia locations from a stored template, which template is associated with the provided PIN in step 46. Of course any number of minutia locations are optionally provided. The 12 minutia locations are provided from the smart card to the processor of the host system in step 47. It is evident to those of skill in the art that from a plurality of minutia locations, little or nothing is determinable about the minutia types or directions. Further, little or nothing is determinable about the fingerprint such as type, ridge flow angles, core location - since there are insufficient minutia to accurately identify the denser cluster about the core - and so forth. As such, the minutia locations themselves are insufficient to provide information for statistical estimation of image features.

The captured fingerprint is filtered and the contrast is adjusted to a normalized level in step 48. The image is then analyzed by the host processor to determine features thereof, and minutia locations are extracted in step 49. The captured fingerprint image is then aligned by the host processor with the 12 minutia locations provided from the smart card, in order to spatially and rotationally orient the image in step 50. Once completed, the processed image is located in direct correlation to the template data. Advantageously, such a process obviates a need for core identification, extraction, and orientation.

The processed image is then analyzed by the host processor to extract data relating to each minutia provided in step 51. For each minutia extracted, a minutia direction, for instance an angle, is returned as is a minutia type. The host processor provides the angles and types to the smart card, in a same order as the locations were provided from the smart card to the host processor in step 52. The smart card processor then compares the angle returned for each minutia to an angle stored within the template data and the minutia types to known minutia types stored within the template to determine if a match between the captured fingerprint image and the template data is likely in step 53. If a match is likely, the user is identified or recognized in step 54. If a match is other than likely, then the authorization attempt is rejected and the user is denied access.

Of note, when the angle is provided with 12 degree increments and there are 8 minutia types, only one byte of data is provided to the smartcard for each minutia. Thus, in the above example only 12 bytes are provided thus minimizing data transfer to the smartcard and correlation processing thereby. Also, the minutia direction is correlatable to a grid angle allowing for storage of minutia with only a few bits.

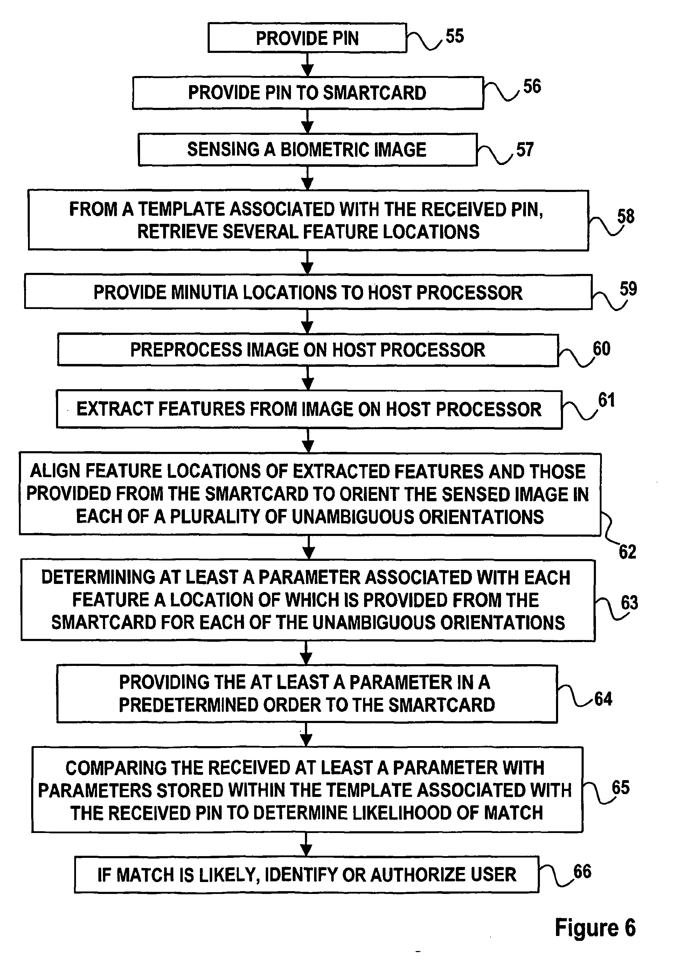

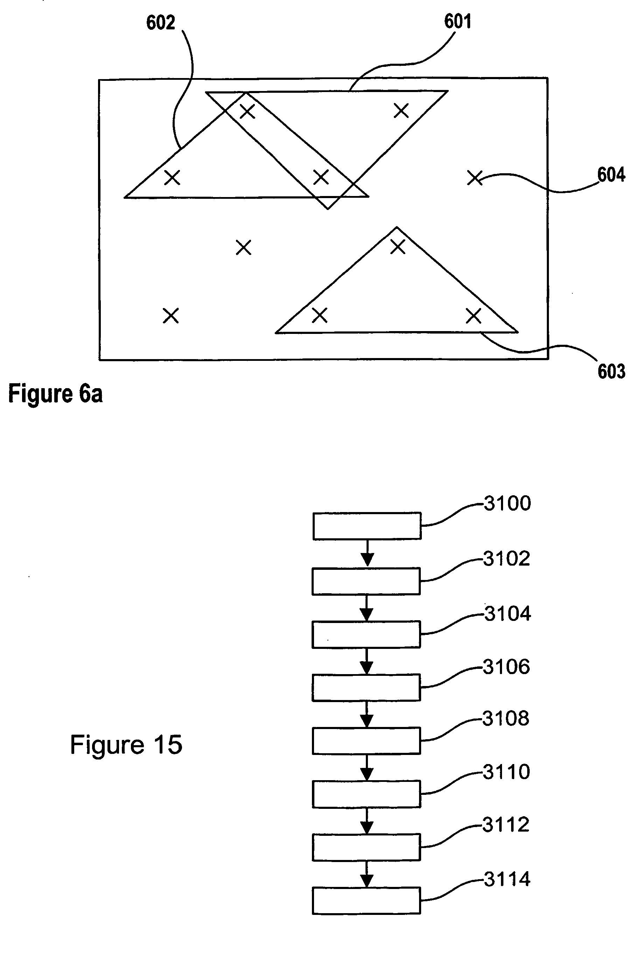

Referring now to Figure 6 a method of preprocessing a fingerprint image according to the instant invention is shown, wherein biometric data in the form of a public portion of a template is not provided to a preprocessor, for instance a processor of a host system, from the smart card. As such, the process is alterable without suffering the drawbacks of the prior art methods.

The user provides in step 55 a PIN to a host computer system in communication with the smart card, and the host computer provides the PIN to the smart card in step 56. Next, a fingerprint image of the user is captured using an imaging device of the host system in step 57. The image is filtered and the contrast is adjusted to a normalized level. The fingerprint image is then analyzed by the host processor to determine features thereof. Typically features of fingerprints include ridge flow angle, minutia locations, minutia types, minutia directions, core location, core orientation, and so forth. Of course, in order for any of the features to have meaning, they all must be related to a global position; this global position and orientation is often related to the core location and orientation.

The method of Figure 6 provides for provision of challenge data relating to a template, the data other than image data of a biometric information source. For instance, the smart card retrieves from the smart card memory a stored template that is associated with the received PIN, and retrieves a plurality of feature locations from the template in step 58. The plurality of locations is of identifiable features, preferably features having accurately identifiable locations.

A processor of the host system receiving in step 59 the challenge and an image of a biometric information source then uses the challenge data to orient the biometric information source in step 60 relative thereto in each of a plurality of unambiguous orientations. This is performed by identifying features within the image in step 61, determining feature locations in step 62, and then moving the feature locations to overlap the provided locations until a reasonable approximation of image positioning is achieved for each of the unambiguous orientations in step 63. For example, three feature locations 601, 602 and 603 are provided which allows for, in this example, three orientations of the image of Figure 6a. Thus, for each orientation, features 604 are differently positioned one relative to another. There are three unambiguous alignments though it is ambiguous which of the three is actually the intended alignment.

Once the image positioning is achieved, data relating to a plurality of features within the image for each one of the plurality of unambiguous orientations are provided to the smart card in a predetermined order for correlation in step 64. For example, the data relates to the 12 minutia nearest the first point provided. Alternatively the data may relate only to the features at the locations provided.

Optionally, only one of the data sets relating to a single alignment is used in the step of correlation.

Thus the processor of the smart card need only compare a plurality of values to values within the template stored thereon in order to form a registration measure for use in user authorization in step 65. Preferably, the comparison is not a fixed comparison to allow for missed minutia or extra minutia within a template. Further preferably, the template accounts for differing orders of minutia in the above example due to inaccuracies in core locating that may occur. If a match is likely, the user is identified or recognized in step 66. If a match is other than likely, then the authorization attempt is rejected and the user is denied access.

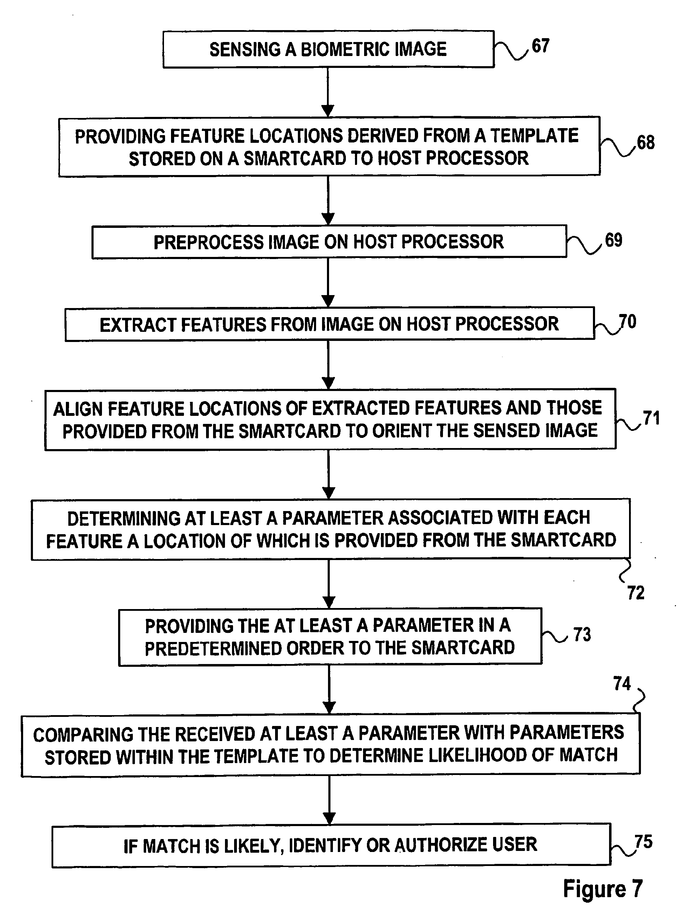

Referring now to Figure 7, a method of preprocessing a fingerprint image according to the instant invention is shown, wherein biometric data in the form of a public portion of a template is not provided to a preprocessor, for instance a processor of a host system, from the smart card. As such, the process is alterable without suffering the drawbacks of the prior art methods.

A fingerprint image of the user is captured using an imaging device of the host system in step 67. Features locations derived from a template stored on a smart card are provided to the host processor in step 68. The image is filtered and the contrast is adjusted to a normalized level in step 69. The fingerprint image is then analyzed by the host processor to determine features thereof, in step 70. Typically features of fingerprints include ridge flow angle, minutia locations, minutia types, minutia directions, core location, core orientation, and so forth. Of course, in order for any of the features to have meaning, they all must be related to a global position; this global position and orientation is often related to the core location and orientation.

The method provides for provision of challenge data relating to a template, the data other than image data of a biometric information source. For instance, the smart card retrieves from the smart card memory a stored template, and retrieves a plurality of feature locations from the template. The plurality of locations is of identifiable features, preferably features having accurately identifiable locations.

A processor of the host system receiving the challenge and an image of a biometric information source then uses the challenge data to orient the biometric information source relative thereto in step 71. This is performed by identifying features within the image, determining feature locations, and then moving the feature locations to overlap the provided locations until a reasonable approximation of image positioning is achieved in step 72.

Once the image positioning is achieved, data relating to a plurality of features within the image are provided to the smart card in a predetermined order for correlation in step 73. For example, the data relates to the 12 minutia nearest the first point provided.

Thus the processor of the smart card need only compare a plurality of values to values within the template stored thereon in order to form a registration measure for use in user authorization in step 74. Preferably, the comparison is not a fixed comparison to allow for missed minutia or extra minutia within a template. Further preferably, the template accounts for differing orders of minutia in the above example due to inaccuracies in core locating that may occur. If a match is likely, the user is identified or recognized in step 75. If a match is other than likely, then the authorization attempt is rejected and the user is denied access.

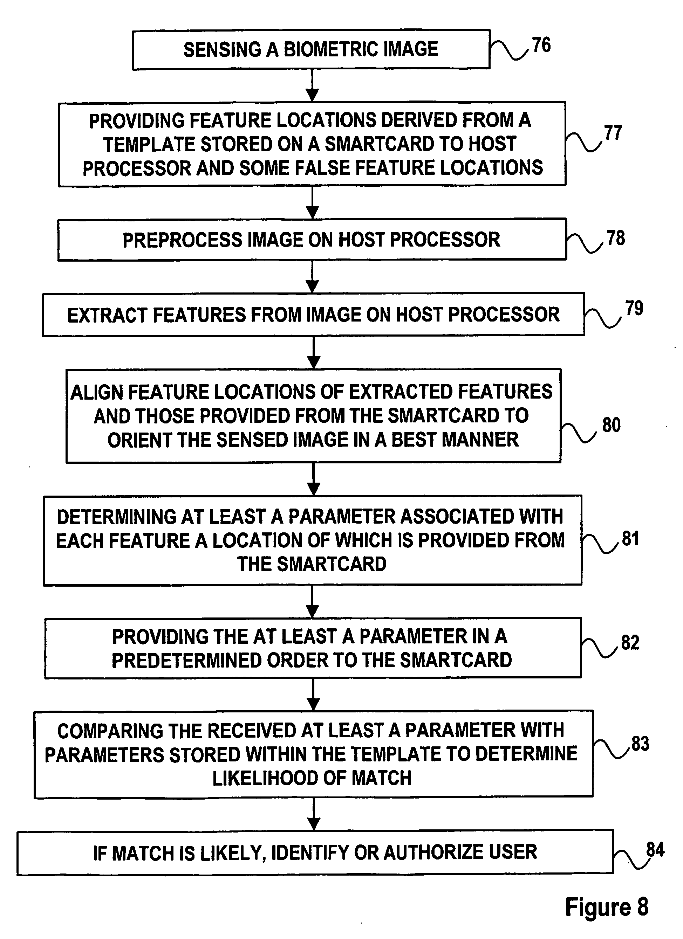

Referring now to Figure 8 a method of preprocessing a fingerprint image according to the instant invention is shown, wherein biometric data in the form of a public portion of a template is not provided to a preprocessor, for instance a processor of a host system, from the smart card. As such, the process is alterable without suffering the drawbacks of the prior art methods.

A fingerprint image of the user is captured using an imaging device of the host system in step 76. Feature locations derived from a template stored on a smart card and some false feature locations are provided to the host processor in step 77. The image is filtered and the contrast is adjusted to a normalized level in step 78. The fingerprint image is then analyzed by the host processor to determine features thereof in step 79. Typically features of fingerprints include ridge flow angle, minutia locations, minutia types, minutia directions, core location, core orientation, and so forth. Of course, in order for any of the feature locations to have meaning, they all must be expressed within a global reference frame; this global reference frame includes position and orientation is often related to the core location and orientation.

The method provides for provision of challenge data relating to a template, the data other than image data of a biometric information source. For instance, the smart card retrieves from the smart card memory a stored template, and retrieves a plurality of feature locations from the template. The plurality of locations is of identifiable features, preferably features having accurately identifiable locations. According to the method of Figure 8, the smart card further provided at least a false feature location, for instance a location that does not correspond to a location of a minutia point.

A processor of the host system receiving the challenge and an image of a biometric information source then uses the challenge data to orient the biometric information source relative thereto and in a best manner in step 80. This is performed by identifying features within the image, determining feature locations, and then moving the feature locations to overlap the provided locations until a reasonable approximation of image positioning is achieved in step 81.

Once the image positioning is achieved, data relating to a plurality of features within the image are provided to the smart card in a predetermined order for correlation in step 82. For example, the data relates to minutia directions and types for the feature locations provided. Of course, when the feature location is a false feature location, no such data is determinable. As such, even less information relating to the fingerprint data is provided.

Thus the processor of the smart card need only compare a plurality of values to values within the template stored thereon in order to form a registration measure for use in user authorization in step 83. Preferably, the comparison is not a fixed comparison to allow for missed minutia or extra minutia within a template. Further preferably, the template accounts for differing orders of minutia in the above example due to inaccuracies in core locating that may occur. If a match is likely, the user is identified or recognized in step 84. If a match is other than likely, then the authorization attempt is rejected and the user is denied access.

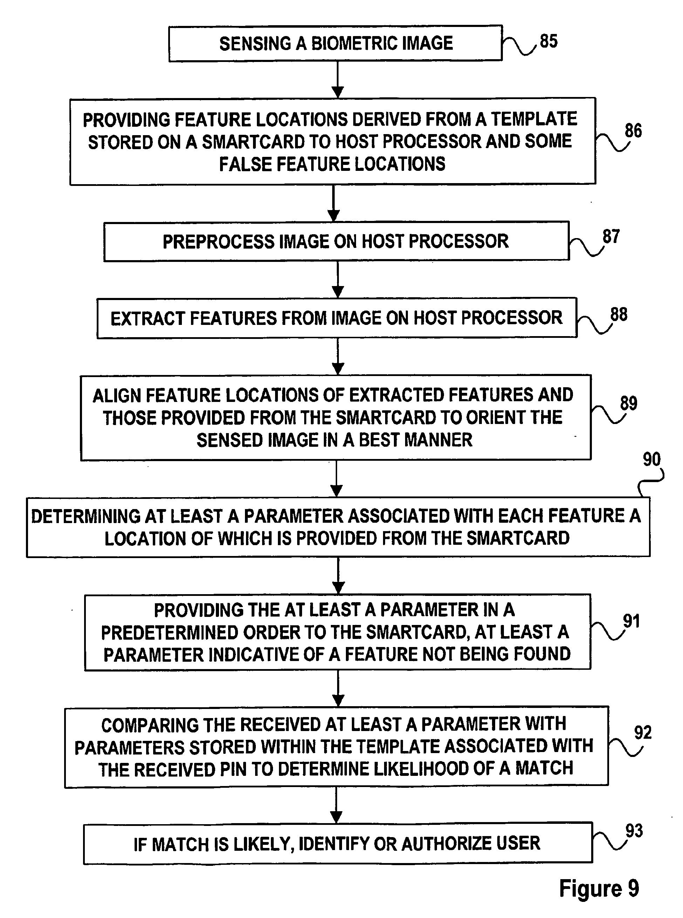

Referring now to Figure 9, a method of preprocessing a fingerprint image according to the instant invention is shown, wherein biometric data in the form of a public portion of a template is not provided to a preprocessor, for instance a processor of a host system, from the smart card. As such, the process is alterable without suffering the drawbacks of the prior art methods.

A fingerprint image of the user is captured using an imaging device of the host system in step 85. Feature locations derived from a template stored on a smart card and some false feature locations are provided to the host processor in step 86. The image is filtered and the contrast is adjusted to a normalized level in step 87. The fingerprint image is then analyzed by the host processor to determine features thereof in step 88. Typically features of fingerprints include ridge flow angle, minutia locations, minutia types, minutia directions, core location, core orientation, and so forth in step 89. Of course, in order for any of the feature locations to have meaning, they all must be expressed within a global reference frame; this global reference frame includes position and orientation is often related to the core location and orientation.

The method provides for provision of challenge data relating to a template, the data other than image data of a biometric information source. For instance, the smart card retrieves from the smart card memory a stored template, and retrieves a plurality of feature locations from the template. The plurality of locations is of identifiable features, preferably features having accurately identifiable locations. According to the method of Figure 9, the smart card further provided at least a false feature location, for instance a location that does not correspond to a location of a minutia point.

A processor of the host system receiving the challenge and an image of a biometric information source then uses the challenge data to orient the biometric information source relative thereto and in a best manner. This is performed by identifying features within the image, determining feature locations, and then moving the feature locations to overlap the provided locations until a reasonable approximation of image positioning is achieved in step 90.

Once the image positioning is achieved, data relating to a plurality of features within the image are provided to the smart card in a predetermined order for correlation in step 91. For example, the data relates to minutia directions of the 12 minutia nearest the first point provided. In addition, the data includes an indication that no feature was extracted at the at least a false feature location. This information is used to verify the accuracy of the information received from the host processor.

Thus the processor of the smart card need only compare a plurality of values to values within the template stored thereon and to expected values for those features that are not present within the fingerprint image in order to form a registration measure for use in user authorization in step 92. Preferably, the comparison is not a fixed comparison to allow for missed minutia or extra minutia within a template. Further preferably, the template accounts for differing orders of minutia in the above example due to inaccuracies in core locating that may occur. If a match is likely, the user is identified or recognized in step 93. If a match is other than likely, then the authorization attempt is rejected and the user is denied access.

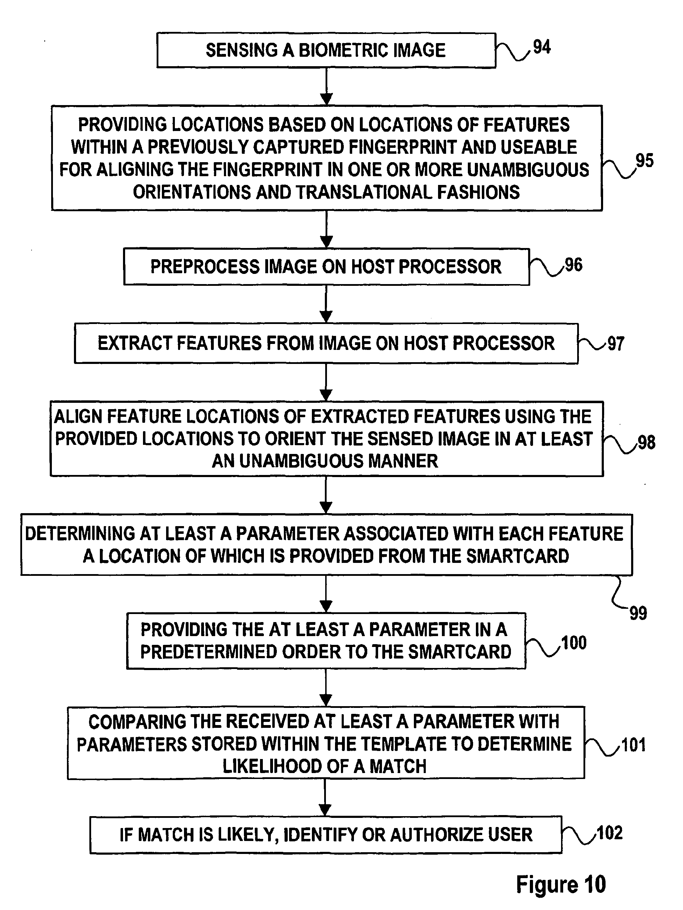

Referring now to Figure 10, a method of preprocessing a fingerprint image according to the instant invention is shown, absent a step of providing biometric data to a processor of a host system, from the smart card.

A fingerprint image of the user is captured using an imaging device of the host system in step 94. The image is filtered and the contrast is adjusted to a normalized level in step 96. Locations based on locations of features within a previously captured fingerprint and useable for aligning the fingerprint in one or more unambiguous orientations and translational fashions are provided in step 95. The fingerprint image is then analyzed by the host processor to determine features thereof in step 97. Typically features of fingerprints include ridge flow angle, minutia locations, minutia types, minutia directions, core location, core orientation, and so forth in step 98. Of course, in order for any of the features to have meaning, they all must be related to a global position; this global position and orientation is often related to the core location and orientation.

Next, the host processor receives from the smartcard a plurality of locations relative to feature locations associated with the template to which the fingerprint data is to be registered. Thus, the locations may be 4 pixels to the right and 3 pixels below , each feature location. The plurality of locations is a known offset and direction from identifiable features, preferably features having accurately identifiable locations. Of course, the known offset is preferably predetermined though it could also be dynamic in nature requiring synchronization between the smartcard and the host or provided from the smartcard to the host. The host processor uses the extracted feature locations to orient the captured fingerprint image relative to the provided locations. This is performed by identifying features within the image, determining feature locations, and then moving the feature locations to overlap feature locations determined relative to the provided locations until a reasonable approximation of image positioning is achieved in step 99.

Once the image positioning is achieved, data relating to a plurality of features within the image are provided in a predetermined order to the smart card for correlation in step 100. For example, the data relates to minutia directions and types of features offset from the locations provided.

Thus the processor of the smart card need only compare a plurality of values to values within a template stored thereon in order to form a registration measure for use in user authorization in step 101. Preferably, the comparison is not a fixed comparison to allow for missed minutia or extra minutia within a template. If a match is likely, the user is identified or recognized in step 102. If a match is other than likely, then the authorization attempt is rejected and the user is denied access.

Advantageously, such a method permits different offsets to be applied to different provided feature locations thereby obfuscating any feature related data that may be determined from the data provided.

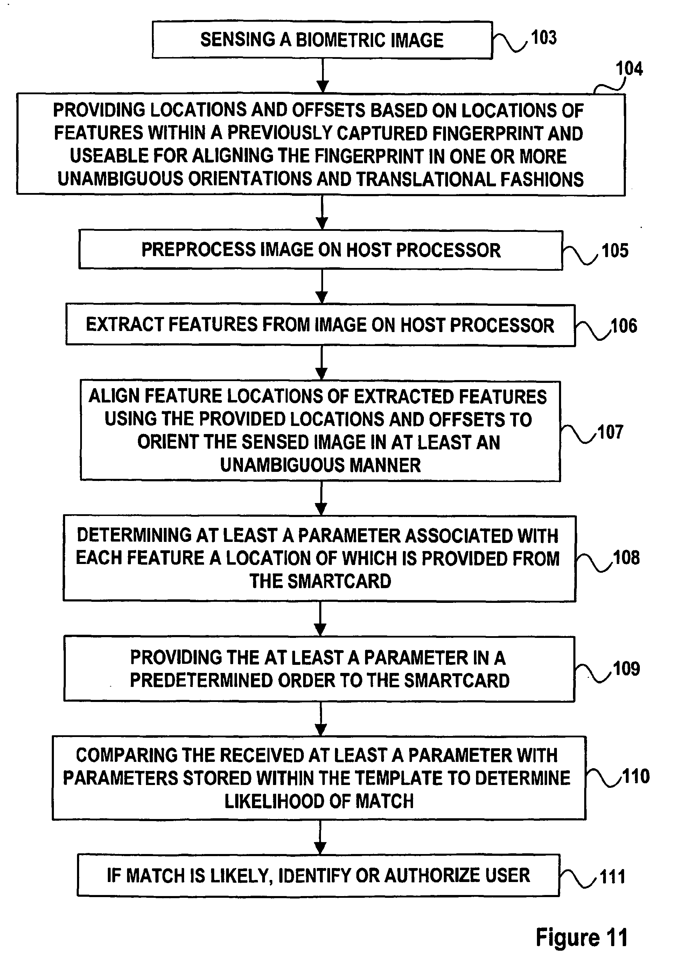

Referring now to Figure 11, a method of preprocessing a fingerprint image according to the instant invention is shown, absent a step of providing biometric data to a processor of a host system, from the smart card.

A fingerprint image of the user is captured using an imaging device of the host system in step 103. Locations and offsets based on locations of features within a previously captured fingerprint and useable for aligning the fingerprint in one or more unambiguous orientations and translational fashions are provided in step 104. The image is filtered and the contrast is adjusted to a normalized level in step 105. The fingerprint image is then analyzed by the host processor to determine features thereof in step 106. Typically features of fingerprints include ridge flow angle, minutia locations, minutia types, minutia directions, core location, core orientation, and so forth. Of course, in order for any of the features to have meaning, they all must be related to a global position; this global position and orientation is often related to the core location and orientation.

Next, the host processor receives from the smartcard a plurality of locations relative to feature locations associated with the template to which the fingerprint data is to be registered. Thus, the locations may be 4 pixels away from each feature location. The plurality of locations is a known offset from identifiable features, preferably features having accurately identifiable locations. Of course, the known offset is preferably predetermined though it could also be dynamic in nature requiring synchronization between the smartcard and the host or provided from the smartcard to the host in step 107. The host processor uses the extracted feature locations and directions to orient the captured fingerprint image relative to the provided locations. This is performed by identifying features within the image, determining feature locations and orientations, and then determining an image orientation such that the points the known offset from the features along the feature direction overlap the locations provided in step 108.

Of course, other data extractable from the features is also useful in determining the direction. Alternatively, the direction is known but the feature angle or type is used to determine an offset to the provided location.

Once the image positioning is achieved, data relating to a plurality of features within the image are provided in a predetermined order to the smart card for correlation in step 109. For example, the data relates to minutia directions and types of features offset from the locations provided.

Thus the processor of the smart card need only compare a plurality of values to values within a template stored thereon in order to form a registration measure for use in user authorization in step 110. Preferably, the comparison is not a fixed comparison to allow for missed minutia or extra minutia within a template. If a match is likely, the user is identified or recognized in step 111. If a match is other than likely, then the authorization attempt is rejected and the user is denied access.

In accordance with yet another embodiment of the invention there is provided a method wherein locations relating to feature locations but not providing any useful information relating to the biometric image is proposed. Here, similar to the method of Figure 11, instead of feature locations, locations determinable from features and their locations are provided. However, unlike the method of Figure 10, here the offset of the feature locations are determined and applied on the smartcard. This eliminates drawbacks of the method of Figure 10. For example, if two different radii were used with a same individual, the two resulting circles, when plotted, have two intersections, which limits feature locations to two locations. As such, instead of a feature lying on a circle, it is now within one of two points. A third radius would likely result in knowledge of the feature location.

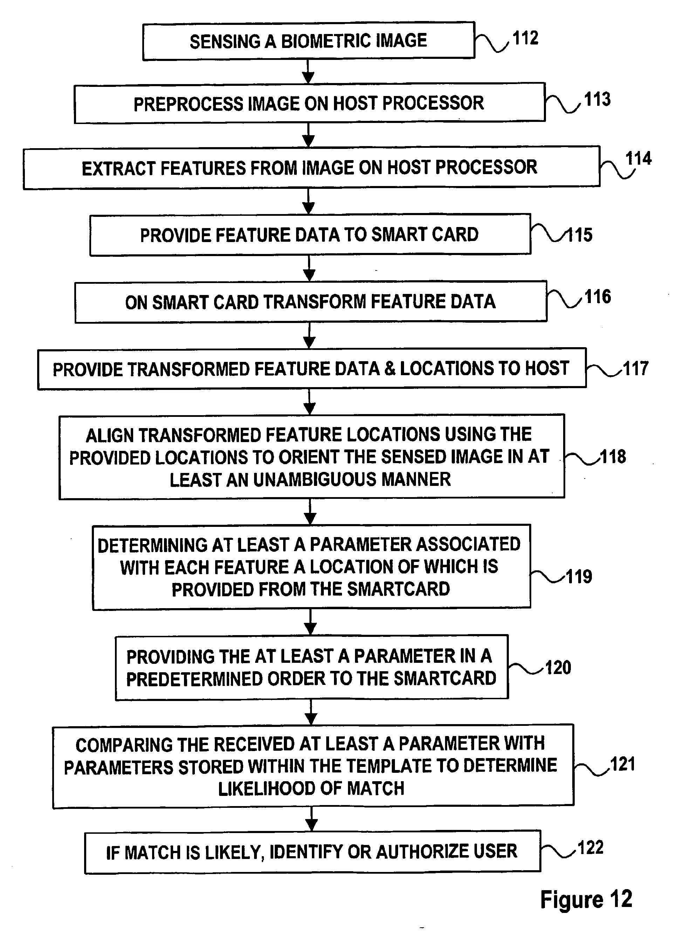

Referring now to Figure 12, a method of preprocessing a fingerprint image according to the instant invention is shown, absent a step of providing biometric data to a processor of a host system, from the smart card.

A fingerprint image of the user is captured using an imaging device of the host system in step 112. The image is filtered and the contrast is adjusted to a normalized level in step 113. The fingerprint image is then analyzed by the host processor to determine features thereof in step 114. Typically features of fingerprints include ridge flow angle, minutia locations, minutia types, minutia directions, core location, core orientation, and so forth. Of course, in order for any of the features to have meaning, they all must be related to a global position; this global position and orientation is often related to the core location and orientation.

Next, the host processor provides to the smartcard data relating to the extracted features in step 115. For example, feature location and directions are provided. The smartcard applies a transform to each feature location in step 116. Since the direction of each feature is provided, the smartcard can use this information in applying the transform. As such, application of radius and angle offsets to each feature location is possible with a reasonable amount of computation. The transformed feature locations are returned to the host processor in step 117 along with a plurality of alignment locations in step 118. Of course, changing radii or angle or feature quality on which these are based is now possible without divulging information on the feature locations of features within the template in step 119. Further, the alignment problem for the host processor is a straightforward alignment process since the feature locations and the alignment locations are known at the outset and need not be redetermined for different potential alignments as is the case for the method of Figure 11.

Thus, the transformed feature locations may be 4 pixels away from each feature location and the alignment locations are similarly 4 pixels from each feature location. Once the image positioning is achieved, data relating to a plurality of features within the image are provided in a predetermined order to the smart card for correlation in step 120. For example, the data relates to minutia directions and types of features offset from the locations provided.

Thus the processor of the smart card need only perform a simple transform for each feature location received and compare a plurality of values to values within a template stored thereon in order to form a registration measure for use in user authorization in step 121. Preferably, the comparison is not a fixed comparison to allow for missed minutia or extra minutia within a template. If a match is likely, the user is identified or recognized in step 122. If a match is other than likely, then the authorization attempt is rejected and the user is denied access.

Advantageously, such a method permits different offsets and/or directions to be applied to different features based on the features themselves in performing image alignment. This obfuscates any feature related data that may be determined from the data provided. This also makes alignment of the image data very difficult absent knowledge of the process and the image contents.

Alternatively, with the alignment data is provided a frame within which to provide image data or data relating to features therein. As such, though twelve (12) minutia locations are provided. Once the image is aligned to the minutia locations, a sub-image within a provided frame is analyzed for features and their types and orientations - angles. Thus, only a portion of the image is used for each correlation. Advantageously, the portion used for correlation can be arbitrarily moved between correlation processes to prevent record playback attacks and to prevent interception of useful image related feature data.

Similarly, the location data is movable. For example, within a template twelve feature locations are stored for each of 20 different rotations of the image. The results for those feature locations are also stored for each of the 20 different orientations. Thus, each time a same individual attempts to gain access, a different set of locations is provided and a different result is expected. Of course, selection from any number of available features further complicates the reverse engineering and/or hacking of such a system. Optionally, instead of storing each permutation on the smartcard with the template, they are calculated in parallel to the host processor determining the values based on the acquired image. Thus, the smartcard processing is no longer a bottleneck within the critical path of the authentication process and can now support any number of rotational angles and translations for any number of features.

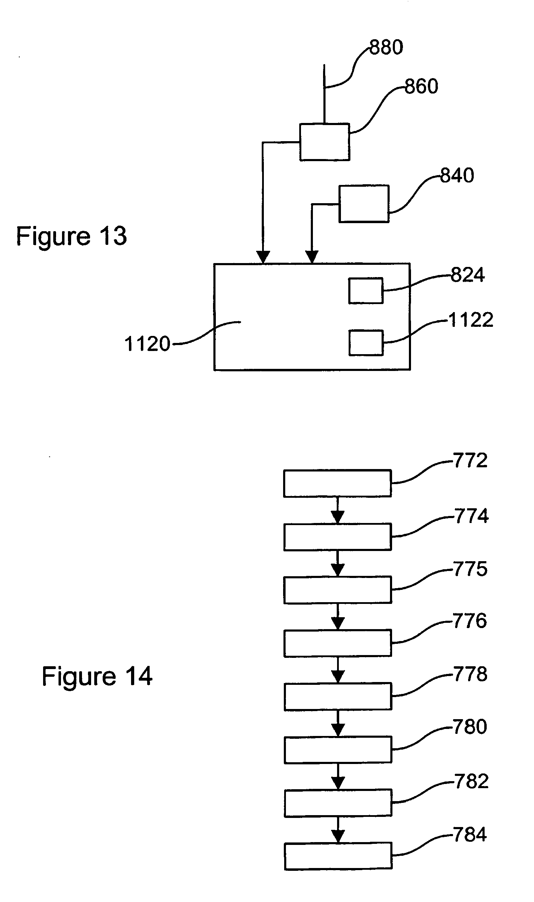

Referring now to Figure 13, shown is a prior art fingerprint identification system for applying the method according to the instant invention. A host processor 1120 comprising a central processing unit 1122 and random access memory 824 is coupled to a biometric sensor 840 and a smart card reader 860. The smart card reader is for receiving a smart card 880, and establishing a connection between the host processor 1120 and the smart card. The biometric sensor 840 senses a fingerprint, and fingerprint data is transmitted to the host processor 1120. The host processor contains software for pre-processing fingerprint data according to data received from the smart card 880 inserted into the smart card reader, and for communicating the pre-processed fingerprint data to the smart card. Alternatively, the smart card reader 860 and the biometric sensor 840 are a same device.

With reference to Figure 14, shown is a flow chart for a method of fingerprint identification with pre-processing of live fingerprint data according to the prior art. In step 772, a live biometric sample in the form of a fingerprint is sensed by the sensor 840 and is provided to the host processor 1122. The host processor 1122 is in communication with smart card 880 via smart card reader 860. The smart card 880 comprises biometric template data stored therein. Biometric template data in the form of type and location of minutiae within a selected area of the fingerprint - usually about the core of the fingerprint, are transmitted from the smart card 880 to the host processor 1122, step 774. The host processor 1122 pre-processes the live fingerprint sample by filtering the image to reduce effects of noise, step 775. Then, the live fingerprint sample is processed by the processor 1122 to determine a frame of reference common to the live fingerprint sample and the biometric template, step 776. The processor 1122 then extracts characteristic features from the live fingerprint sample, step 778, the extracted characteristic features within the known frame of reference. At step 780, the extracted features and the template features are compared, and it is determined whether or not the features of the live fingerprint sample match the features of the biometric template stored on the smart card, step 782. When a match is determined within predetermined limits, the individual providing the live fingerprint sample is authenticated at step 784.

According to the method illustrated in Figure 14, the smart card 880 surrenders the biometric template stored on the smart card. When the feature information within the template are received by the host processor 1122, a third party with access to the host processor 1122 obtains sufficient information to reconstruct within statistical limits portions of an image of the fingerprint sample, for which data are stored on the smart card 880. This greatly increases risks associated with a breach in security. Should a third party gain access to secure data such as encryption keys within a smart card 880, the data within the smartcard are no longer secure.

According to the method illustrated in Figure 14, the smart card surrenders information corresponding to a portion of biometric sample. When this information, for example a portion of the biometric sample or a plurality of feature locations are received by the host processor 1122, a third party with access to the host processor 1122 obtains sufficient information to reconstruct within statistical limits portions of an image of the fingerprint, for which data are stored on the smart card. This greatly increases risks associated with a breach in security. Should a third party gain access to secure data such as encryption keys within a smart card, the data within the smartcard are no longer secure.

Performing a biometric comparison on a smart card rather than using a PIN is desirable since it provides a stronger binding of the card to the user. Due to the computation and memory constraints of smart cards, however, the amount of processing operations on the biometric data that are possibly and conveniently performed on a smart card is limited. Therefore, match-on-card (MOC) systems typically rely on other processors, such as host processors, to do some pre-processing of the data relevant for a final match. Public data delivered by a smart card to a host processor allows the host processor to perform operations beyond template creation from a live sample, including for example alignment or selection of features to be sent to the smart card for final matching.

A problem associated with today's MOC systems is that public data is either part of an enrollment template, or it provides information about features stored within the enrollment template. In either case, the amount of template information that can be used for matching is reduced, since it is possibly derived from the public data or determinable therefrom and is therefore not sufficiently secure for matching purposes. When considering the structure of public data, it is evident that public data is either part of the enrollment template, or it is not part of the enrollment templates. Methods relating to public data being part of the enrollment template are well known in the prior art. In particular, the above-cited patent applications assigned to Precise Biometrics disclose methods in which the public data is part of the enrollment template. The instant invention relates to a method of generating public data that is not part of an enrollment template, and that is yet secure since it does not surrender valuable fingerprint data.

A general approach to this problem includes applying a hash function F to template data. Scope and type of suitable hash functions F however is limited, due to the absence of an absolute coordinate system. Features of an enrollment fingerprint template as well as of a live fingerprint template exist within their own local reference frames. A hash function F applied to a set of data in one reference frame will produce entirely different results when applied to the same set of data in another reference frame. In many cases a hash function F is unusable for fingerprint matching even when the reference frames of the live fingerprint template and enrollment fingerprint template differ only slightly.

In accordance with yet another embodiment of the invention there is provided a method wherein locations relating to feature locations but not providing substantial information relating to the biometric image is proposed. Unfortunately, for the above hashing technique with a radius and angle, if two different radii were used with a same individual, the two resulting circles, when plotted, have two intersections, which limits feature locations to two locations. As such, instead of a feature lying on a circle, it is now within one of two points. A third radius would likely result in knowledge of the feature location.

Referring back to Figure 12, the method of preprocessing a fingerprint image according to the instant invention is briefly recapitulated, absent a step of providing biometric data to a processor of a host system, from the smart card.

A fingerprint sample is formed by capturing a fingerprint image of the user using an imaging device of the host system in step 112. The image is filtered and the contrast is adjusted to a normalized level in step 113. The fingerprint image is then analyzed by the host processor to determine features thereof in step 114. Typically, features of fingerprints include ridge flow angle, minutia locations, minutia types, minutia directions, core location, core orientation, and so forth. Of course, in order for any of the features to have meaning, they all must be related to a global position; this global position and orientation is often related to the core location and orientation.

Next, the host processor provides to the smartcard data relating to the extracted features in step 115. For example, feature location and directions are provided. The smartcard applies a transform to each feature location in step 116. Since the direction of each feature is provided, the smartcard can use this information in applying the transform. As such, application of radius and angle offsets to each feature location is possible with a reasonable amount of computation. The transformed feature locations are returned to the host processor in step 117 along with a plurality of alignment locations in step 118. Of course, changing radii or angle or feature quality on which these are based is now possible without divulging information on the feature locations of features within the template in step 119. Further, the alignment problem for the host processor is a straightforward alignment process since the feature locations and the alignment locations are known at the outset and need not be redetermined for different potential alignments as is the case for the method of Figure 12.

Thus, the transformed feature locations may be 4 pixels away from each feature location and the alignment locations are similarly 4 pixels from each feature location. Once the image positioning is achieved, data relating to a plurality of features within the image are provided in a predetermined order to the smart card for correlation in step 120. For example, the data relates to minutia directions and types of features offset from the locations provided.

Thus the processor of the smart card need only perform a simple transform for each feature location received and compare a plurality of values to values within a template stored thereon in order to form a registration measure for use in user authorization in step 121. Preferably, the comparison is not a fixed comparison to allow for missed minutia or extra minutia within a template. If a match is likely, the user is identified or recognized in step 122. If a match is other than likely, then the authorization attempt is rejected and the user is denied access.

Advantageously, such a method permits different offsets and/or directions to be applied to different features based on the features themselves in performing image alignment. This obfuscates any feature related data that may be determined from the data provided. This also makes alignment of the image data very difficult absent knowledge of the process and the image contents.

The instant invention is preferably used in connection with biometric identification systems. In an embodiment, a matching operation is performed on a smart card that contains an enrollment template of a fingerprint. However, the instant invention is not restricted to use with smart cards, but equally applies to server based biometric systems. In general the method is practiced on systems including comparison processors, like the ones within a smart card, as well as other processors such as host processors, the other processors using the public data to process a live fingerprint sample.

According to the method of the instant invention, a reference frame is determined implicitly by the entity processing or pre-processing a live biometric sample. The reference frame is either global in nature for the biometric sample or is local to features within the biometric sample. In an embodiment, as described above, parameters of a hash function are dependent on feature characteristics such as direction, type, etc. In a further embodiment, the hash function or its parameters are dependent on a selected feature. Therefore, a hash function F is effectively used for secure fingerprint matching. Since it is possible to implicitly determine reference frames using the biometric sample, the method according to the instant invention allows also complicated hash functions to be used, thereby decreasing the possibility for determining the biometric template contents, from the public.

In the following, various examples of hash functions F generated from a biometric template, referred to as reference template, are now described. Let Ref be the set of reference template features, the set containing minutia Mi. Further, the pair (Xi, Yi) refers to a location of minutia i, (Ai) refers to a direction of minutia I, and (Ti) refers to a type of minutia i. If F is a hash function then public data PD are expressed as hash function of the set of reference features: PD = F{Ref}.

A typical hash function F1 that is known in the prior art takes as its arguments minutia Mi as well as two random numbers s and t. F1 then generates a random offset of the minutia location:

$$F_1( M_i, s, t) = (X_i + s{\cdot}\cos( A_i + t ), Y_i + s{\cdot}\sin( A_i + t )) \qquad (1)$$

A key to implementation of the hash function $F_1$ is a missing frame of reference, leading to the problems as discussed above. A solution to this problem is the use of a particular minutia $M_k$ as internal reference frame for hash functions. Typically one $M_k$ is selected to calculate the hash function F from the enrollment fingerprint template. However, to calculate the proper hash function F for the live fingerprint template, a plurality of possible Mk values for a live fingerprint template is applied, and a best alignment is determined. As this is performed by the host processor , the additional processing is not significant. The best alignment is typically determined by comparing a set of n provided minutia data $M_n$, which are provided as transformed data $M'_n$ where $M'_n = F(M_n)$, with a set of transformed corresponding

calculated minutia data $(M_{calc})'_n$ for the live fingerprint template. Typically, a best alignment is determined by minimizing goodness functions G, such as $G = \sum_{j}^{n} \left| (M_{calc})'_j - M'_j \right|$ G or $G = \sum_{i}^{n} \left( (M_{calc})'_j - M'_j \right)^2$. Here, Mi is to be interpreted as minutia vector Mi = (Xi, Yi, Ai). The minutia vector typically has three components, but alternatively has fewer or more than three components. The minutia corresponding to $(M_{calc})'_k$ resulting in a best alignment is used for the hash function F when applied to the live fingerprint template features.

Various hash functions F with internal reference are possible. It is advantageous to incorporate into the hash function F the difference r between the $i^{th}$ minutia Mi and a particular reference minutia $M_r$, r = | $M_i$ - Mr|. Two representative hash functions F2 and F3 are defined as follows:

$$F_2(M_i, M_r) = (X_i + r \cdot \cos(A_i), Y_i + r \cdot \sin(A_i)) \tag{2}$$

$$F_3(M_i, M_r) = (X_i + r \cdot \cos(A_i - A_r), Y_i + r \cdot \sin(A_i - A_r)) \tag{3}$$

$F_2$ is derived from the known function $F_1$ by replacing the random number s by the difference r and setting the random number t equal to zero, whereas F3 is derived from the known function $F_1$ by replacing the random number s by the difference r and setting the random number t equal to the direction of the reference minutia $A_r$. Clearly, both functions $F_2$ and $F_3$ implicitly provide a relation to the reference minutia Mr.

Instead of using the trigonometric functions sine and cosine as constructs for a hash function F, one is free to choose any arbitrary function R as hash modifier. Particularly, functions that take differences involving the reference minutia are suitable for use in the method of the instant invention. In the following, RX is an arbitrary function of the difference $X_i$-$X_k$, RY is an arbitrary function of the difference $Y_i$-$Y_k$, and RA is an arbitrary function of the difference $A_i$-$A_k$. Given these definitions, hash functions $F_4$ and $F_5$ are defined as follows:

$$F_4(M_i, M_r) = (X_i + RX, Y_i + RY) \tag{4}$$

$$F5(M_i, M_r) = (X_i + RX, Y_i + RY, A_i + RA) \tag{5}$$

According to hash function F4, minutia locations are presented to the host processor in an obfuscated fashion, whereas according to hash function F5, minutiae locations as well as minutiae directions are presented to the host processor in an obfuscated fashion.

In another example of a hash function, a frame of reference is not provided by a minutia Mr, but rather by a general reference feature, such as a base direction D. Let s be a random number, replacement with the random number t in $F_1$ by D results in hash function $F_6$:

$$F_6(M_i, s, D) = (X_i + s \cdot \cos(A_i + D), Y_i + s \cdot \sin(A_i + D)) \tag{6}$$

The host processor evaluates a goodness function G for a plurality of D values. For example the trial D values are chosen between 0° and 360° being spaced apart by increments of 1°. The D value resulting in the smallest value for G is the chosen for the final alignment. It is emphasized that D is not known a priori to the host computer, but is determined according to a well-defined computational procedure.

It is apparent to one of skill in the art that simpler or more complex hashing methods as well as varied hashing methods are supported according to the invention. Of course, since hashing for alignment purposes is typically only performed by the host processor, which is typically quite powerful, complexity of the hashing method is of lesser concern than obfuscation provided thereby. Further, complex determinations requiring many hashing attempts and alignment attempts are possible so long as the amount of processing time by the host processor is kept below an expected wait time of a user. For example, ½ second appears to be acceptable to most user providing adequate time to perform many complex operations on a 2.4GHz Pentium® processor. For example, each feature may be hashed by a function of its characteristic and a characteristic of a nearby feature or features. Thus, a search space results to find accurate alignment depending on which nearby features are used in the function. Of course, one of skill in the art will appreciate that erroneous features - either present or absent - may affect suitability of some hashing functions for the purposes of the present invention.

The method according to the instant invention provides a substantial safety feature so that when data delivered by a smart card relate to data within a biometric template, the data does not provide inferential value to a third party intercepting the data other than for the purpose the data is provided for.

Referring to Figure 15, a simplified flow diagram of an embodiment of the invention is shown. A smart card having a biometric template stored therein in the form of a fingerprint template is provided to a host processing system, step 3100. Typically, the fingerprint template is stored as a collection of data referring to location, orientation, and type of characteristic features thereof. Typically, data for twenty or more characteristic features are stored within the template. A set of characteristic features for alignment are selected, step 3102. With reference to Table 1, the data corresponding to the selected alignment features are depicted. The set of selected alignment features is typically a subset of all characteristic features stored on the smart card.

Table 1

| # | FEATURE | X-LOC | Y-LOC | ORIENTATION | TYPE |
|---|---------|-------|-------|-------------|------|
| 1 | Minutia | 0 | 0 | 0 | 0 |
| 2 | Minutia | 4 | 4 | 30 | 2 |
| 3 | Minutia | -4 | -1 | 300 | 1 |
| 4 | Minutia | 1 | -4 | 270 | 1 |

For each feature, information is stored for a set of two ordinates, an orientation, as well as a feature type. The feature type information is preferably coded, a "0" indicating a bend, a "1" indicating an end, a "2" indicating a bifurcation, and so forth.

In step 3104, an internal reference is selected. Depending on a hash function, the internal reference is either a minutia Mr (hash functions $F_2$, $F_3$, $F_4$, $F_5$), feature dependent, or a general reference such as a base direction D (hash function $F_6$). Data for the set of selected alignment features is transformed according to a hash function using reference data. For example, one of the hash functions $F_2$, $F_3$, $F_4$, $F_5$ or $F_6$ is used. The transformed data are then transmitted to a host processor, step 3106. Information about a type of hash function is either stored in memory of the host processor or is transmitted from the smart card to the host processor. The host processor hashes a biometric sample to reconstruct a best hash function based on the set of transformed data received from the smart card, step 3108. For example, in case of using a hash function F6, the host processor hashes the live fingerprint sample accordingly to determine an alignment between the two sets of hashed data. This provides a known frame of reference, step 3110. Then, the data for the features of the live fingerprint sample within the known frame of reference are transferred to the smart card, step 3112. On the smart card, the received data are compared to the template data, step 3114, and it is determined whether the two sets of data are sufficiently matched.

Advantageously, given a known hash function and a live fingerprint template, it is possible to perform the hash function to result in hashed public data. As such, the above-described hash functions allow for transmission of public data for use in alignment, the public data other than actual feature coordinates but feature coordinates are determinable therefrom in the presence of a matching fingerprint sample. Thus, absent the correct fingerprint, little useful information is available from the co-ordinate data. That said, with the correct fingerprint data, the information is sufficient for the task for which it is provided.

It is clear to one of skill in the art that, based on the above disclosure, the method is applicable to retinal scans, palmprints, pore based biometric authentication techniques, and any other image and feature based correlation methods.

In the above example, the method according to the instant invention is described with reference to a MOC system using a smart card. It is understood that a smart card comprises memory for storing data, an interface for communicating and exchanging data with other devices, as well as a processor for manipulating stored data. The method according to the instant invention is not restricted to MOC systems. For example, public data are possibly used in server-based authentication systems where one or more host processors - workstations - perform processing of the biometric sample with the public data prior to transmitting the processed data to a server.

**Claims**

1. A method for matching biometric template data stored on a smart card, respectively on an authentication server, including the steps of:

   - sensing a biometric source to provide a biometric image to a host processor, respectively to a workstation; wherein the host processor, respectively the workstation, is in communication with a smart card, respectively with an authentication server, having biometric template data stored thereon, said biometric template data comprising template feature coordinate data and template additional data relating to the characteristics of the features, for a set of non-contiguous features ;
   - providing the coordinate template data for each feature of the set of non-contiguous features, from the smart card, respectively from the authentication server, to the host processor, respectively to the workstation (35; 47; 59; 68; 77; 86; 95; 104);
   - extracting, from the biometric image, feature coordinate data for correlation with the set of non-contiguous features;
   - aligning the biometric image within a known frame of reference relative to the template data on the basis of the template coordinate data and the extracted coordinate data (38; 50; 62; 71; 80; 89; 98; 107; 118);
   - extracting, from the aligned biometric image, additional data for the set of non-contiguous features (39; 51; 63); and
   - providing the extracted additional data to the smart card, respectively to the authentication server, (40; 52; 64; 73; 82; 91; 100; 109) to be matched with the template additional data for the set of non-contiguous features.

2. A method according to claim 1, **characterized in that** the non-contiguous features of the template include minutia, data for which is recorded within the template.

3. A method according to claim 2, **characterized in that** the non-contiguous features of the template include only minutia, data for which is recorded within the template.

4. A method according to any of the preceding claims, **characterized in that** the non-contiguous features of the template include false features for which data is other than stored within the template.

5. A method according to claim 4 comprising the step of identifying false feature locations.

6. A method according to claim 4 comprising the step of identifying false feature locations, and **characterized in that** the biometric extracted data includes data relating to feature locations identified as false feature locations.

7. A method according to any of the preceding claims, **characterized in that** the extracted feature coordinate data includes minutia locations of minutia located within the biometric image.

8. A method according to any of the proceeding claims, **characterized in that** the extracted additional data is provided to the smart card in a same order of features as the order of the provided template coordinates data.

9. A method according to any one of claims of the preceding claims, **characterized in that** the additional data includes the minutia directions for each minutia for which a template coordinate data was received from the smart card.

10. A method according to any of the preceding claims, **characterized in that** the plurality of non-contiguous features includes at least 10 features.

11. A method according to claim 10, **characterized in that** the plurality of non-contiguous features includes all features of at least one feature type.

12. A method according to any of the preceding claims, **characterized in that** the plurality of non-contiguous features are selected to support even distribution to identification of regions of higher feature density.

13. A method according to any of the preceding claims, **characterized in that** the plurality of non-contiguous features are selected to maximize distances there between for use in alignment to reduce angular alignment errors.

14. A method according to any of the preceding claims comprising the step of providing an identifier to the smart card, the identifier for use in determining the template.

15. A method according to claim 14 comprising the step of: determining a template associated with the provided identifier as the template and retrieving the template coordinate data from the template.

16. A method according to any of the preceding claims comprising the step of, with the host processor, pre-processing the biometric image.

17. A method according to claim 16, **characterized in that** the pre-processing of the biometric image is performed to eliminate potential false features from the biometric image (36; 48; 60; 69; 78; 87; 96; 105).

18. A method according to claim 1 comprising a step of:

   - correlating the received biometric extracted additional data and template additional data stored within the template (41; 53; 65; 74; 83; 92; 101; 110; 121);
   - performing at least one step of identifying an individual and other than identifying the individual in dependence upon a result of the step of correlating (42; 54; 66; 75; 84; 93; 102; 111; 122).

19. A method according to any of the preceding claims comprising a step of:

   - correlating the received biometric extracted additional data and template additional data stored within the template;
   - when a correlation is indicative of an authorized individual, retrieving data from the smart card for provision to the host processor.

20. A method according to any of the preceding claims comprising a step of:

   - correlating the received biometric extracted additional data and template additional data stored within the template;
   - when a correlation is indicative of an authorized individual, performing a security related process on the smart card, the security related process for accessing secure data, the secure data accessible only upon a successful step of correlation indicative of an authorized individual.

21. A method according to any of the preceding claims **characterized in that** the biometric image is a fingerprint image.

22. A method according to any of the preceding claims **characterized in that** the biometric image is aligned within each of a plurality of known frames of reference and **characterized in that** biometric extracted additional data is provided to the smart card within each of the plurality of frames of reference.

23. A method according to any of the preceding claims, comprising a step of:

   - registering biometric data with a template on a smart card including:
   - providing (35; 47; 59; 68; 77; 86; 95; 104) alignment data including coordinates for transmission from the smart card.

24. A method according to any of the preceding claims, **characterized in that** the template coordinates data are coordinates offset from feature co-ordinates by a fixed offset.

25. A method according to claim 24 comprising the steps of:

   - receiving feature data; and,
   - transforming the feature data in accordance with the offset.

26. A method according to any one of claims 24 and 25 comprising the steps of:

   - providing sample biometric data relating to at least a biometric information sample;
   - extracting from the sample biometric data feature data relating to each of a plurality of features;
   - providing a transformation function F, the transformation function dependent upon a characteristic of at least one of the plurality of features, the characteristic determinable from the plurality of features but other than determinable from a result of the transformation function in isolation; and,

- transforming at least two of the plurality of features according to the transformation function *F*, resulting in transformed features being aligned with the alignment data.

27. A method according to claim 26, wherein the transformation function is a function of a selected internal reference feature, the internal reference feature included in the plurality of biometric features.

28. A method according to claim 26 or 27, wherein the transformation function is a function dependent upon a characteristic of each feature other than a location thereof.

29. A method according to any one of claims 26 to 28, wherein the plurality of features include fingerprint minutia.

30. A method according to any one of claims 26 to 29, wherein the transformation function is a function of a location of the fingerprint minutia and at least one of an orientation and a type of the fingerprint minutia.

31. A method according to any one of claims 26 to 29, wherein the transformation function F is of the form:

$$F( M_i, r, t) = (X_i + r*\cos( A_i + t ), Y_i + r*\sin( A_i + t ))$$

Where
r and t are random parameters;
Mi represent Minutia i;
(Xi, Yi) be the location of Minutia i; and
(Ai) be the direction of Minutia i.

32. A method according to any one of claims 26 to 29, wherein the transformation function F is of the form:

$$F(M_k, M_i) = (X_i + r_i * \cos( A_i ), Y_i + r_i * \sin( A_i ) )$$

Where ri = |Mk - Mi|;
Mi represent Minutia i;
(Xi, Yi) be the location of Minutia i; and
(Ai) be the direction of Minutia i.

33. A method according to any one of claims 26 to 29, wherein the transformation function F is of the form:

$$F(M_k, M_i) = (X_i + r_i * \cos( A_i - A_k ), Y_i + r_i * \sin( A_i - A_k ) )$$

Where ri = |Mk - Mi|;
Mi represent Minutia i;
(Xi, Yi) be the location of Minutia i; and
(Ai) be the direction of Minutia i.

34. A method according to any one of claims 26 to 29, wherein the transformation function F is of the form:

$$F(M_k, M_i) = (X_i + R_x, Y_i + R_y )$$

Where Rx is an arbitrary function of Xi - Xk;
Ry is an arbitrary function of Yi - Yk;
Mi represent Minutia i; and,
(Xi, Yi) be the location of Minutia i.

**35.** A method according to any one of claims 26 to 29, wherein the transformation function F is of the form:

$$F(Mk, Mi) = (Xi + Rx, Yi + Ry, Ai + A )$$

Rx is an arbitrary function of Xi - Xk;
Ry is an arbitrary function of Yi - Yk;
A is an arbitrary function of Ai - Ak;
Mi represent Minutia i;
(Xi, Yi) be the location of Minutia i; and
(Ai) be the direction of Minutia i.

**36.** A method according to any one of claims 26 to 29, wherein the transformation function F is of the form:

$$F( Mi, r, D) = (Xi + r*cos( Ai + D), Yi + r*sin( Ai + D ))$$

Where r and t are random parameters;
D is determined;
Mi represent Minutia i;
(Xi, Yi) be the location of Minutia i; and
(Ai) be the direction of Minutia i.

**37.** A method according to claim 23 or 24, **characterized in that** the coordinates are co-ordinates offset from feature co-ordinates by an offset and in a direction, at least one of the offset and the direction dependent upon a characteristic of the feature.

**38.** A method according to any one of claims 23, 24, and 37 comprising the steps of:

- receiving feature data; and,
- transforming the feature data in accordance with the offset and the direction.

**39.** A method according to claim 23, comprising the step of:

- receiving data relating to identified false feature locations; and
- verifying that the feature locations identified as false feature locations correspond to false feature locations.

**40.** A method according to claim 23, **characterized in that** the biometric data includes data determined within each of a plurality of known frames of reference and **characterized in that** the step of correlating is performed for identifying the data within the known frame of reference and correlating that data with data from the template.

**41.** A method according to claim 22, **characterized in that** the plurality of known frames of reference includes two known frames of reference.

**42.** A smart card for performing biometric identification thereon comprising:

- a transceiver for transmitting data from the smart card and for receiving data provided to the smart card;
- a processor; and,
- a memory for storing template data relating to a biometric image and for storing data relating to instructions for execution by the processor, the instructions comprising instructions for performing the steps of:

- providing; 47; 59; 68; 77; 86; 95; 104) alignment data including coordinates of non-contiguous features of the template to the transceiver for transmission from the smart card, the alignment data for use by another processor in aligning sensed biometric data within a known frame of reference,
- receiving additional biometric data aligned within the known frame of reference, the biometric data received from other than within the smart card and relating to characteristics of features of the biometric image and

- correlating (41; 53; 65; 74;83; 92; 101; 110) the received biometric data with template additional data stored within the memory, the correlating performed within the smart card; and
- performing one of identifying and authorizing (42; 54; 66; 75; 84; 93; 102; 111; 122) an individual in dependence upon the step of correlating. of non-contiguous features of the template relating to characteristics of features

43. A biometric imaging station for use with a portable electronic device in performing biometric identification on the portable electronic device comprising:

- a biometric sensor for sensing (33; 45; 57; 67; 76; 85; 94; 103; 112) an image of a biometric information source to provide sensed biometric image data;
- a transceiver for transmitting data to the portable electronic device and for receiving data provided from the portable electronic device;
- a memory for storing data; and,
- a processor for performing the steps of:

- receiving (35; 47; 59; 68; 77; 86; 95; 104) alignment data including coordinates of non-contiguous features of the template from the transceiver from the portable electronic device, the alignment data for use by the processor in aligning the sensed biometric data within a known frame of reference,
- aligning (38; 50; 62; 71; 80; 89; 98; 107; 118) the sensed biometric image data within the known frame of reference,
- determining (39; 51; 63) from the aligned biometric image data additional biometric data relating to characteristics of features, and
- providing (40; 52; 64; 73; 82; 91; 100; 109) the additional biometric data based on the aligned biometric image data and within the known frame of reference the portable electronic device.

44. A storage medium having data stored therein for use with the biometric imaging station of claim 43 and comprising instructions for performing the steps of:

- receiving (35; 47; 59; 68; 77; 86; 95; 104) alignment data including coordinates of non-contiguous features of the template from the transceiver from the portable electronic device, the alignment data for use by the processor in aligning the sensed biometric data within a known frame of reference,
- aligning (38; 50; 62; 71; 80; 89; 98; 107; 118) the sensed biometric image data within the known frame of reference,
- determining (39; 51; 63) from the aligned biometric image data additional biometric data relating to characteristics of features, and
- providing (40; 52; 64; 73; 82; 91; 100; 109) the additional biometric data based on the aligned biometric image data and within the known frame of reference of the portable electronic device.

45. A biometric identification system comprising:

- a first memory;
- a first transceiver;
- a biometric sensor for sensing (33; 45; 57; 67; 76; 85; 94; 103; 112) an image of a biometric information source, and for providing sensed biometric image data to a first processor;
- said first processor in operative communication with the first transceiver, the first processor for executing the steps of:

o receiving sensed biometric image data from the biometric sensor,
o receiving (35; 47; 59. 68; 77; 86; 95; 104) alignment data including coordinates of non-contiguous features of the template from the first transceiver, the alignment data for use by the processor in aligning the sensed biometric image data within a known frame of reference,
o aligning (38; 50; 62; 71; 80; 89; 98; 107; 118) the sensed biometric image data within the known frame of reference,
o determining (39; 51; 63 from the aligned biometric image data additional biometric data relating to characteristics of features, and
o providing the extracted biometric data based on the aligned biometric image data and within the known frame of reference to the first transceiver;

- a second memory for storing biometric template data;
- a second transceiver in communication with the first transceiver for transmitting data thereto and for receiving data therefrom; and,
- a second processor in operative communication with the second transceiver, the second processor for performing the steps of:

o providing (40; 52; 64; 73; 82; 91; 100; 109) said alignment data including coordinates to the second transceiver for transmission to the first transceiver, the alignment data for use by the first processor in aligning sensed biometric data within a known frame of reference
o receiving said additional biometric data aligned within the known frame of reference, and
o correlating (41; 53; 65; 74:83, 92; 101: 110) the received additional biometric data with template additional data stored within the second memory.

## Patentansprüche

1. Verfahren zum Abstimmen biometrischer Vorlagendaten, die auf einer Smart Card bzw. auf einem Authentifizierungs-Server gespeichert sind, das die folgenden Schritte einschließt:

- Erfassen einer biometrischen Quelle zum Bereitstellen eines biometrischen Bildes für einen Host-Prozessor bzw. eine Workstation, wobei der Host-Prozessor bzw. die Workstation mit einer Smart Card bzw. einem Authentifizierungs-Server kommuniziert, auf der/dem biometrische Vorlagendaten gespeichert sind, und die biometrischen Vorlagendaten Vorlagen-Merkmalkoordinaten-Daten und Vorlagen-Zusatzdaten, die sich auf die Eigenschaften der Merkmale beziehen, für eine Gruppe nicht zusammenhängender Merkmale umfassen;
- Bereitstellen der Koordinaten-Vorlagendaten für jedes Merkmal der Gruppe nicht zusammenhängender Merkmale von der Smart Card bzw. von dem Authentifizierungs-Server für den Host-Prozessor bzw. für die Workstation (35; 47; 59; 68; 77; 86; 95; 104);
- Extrahieren von Merkmalkoordinaten-Daten aus dem biometrischen Bild zur Korrelation mit der Gruppe nicht zusammenhängender Merkmale;
- Abgleichen des biometrischen Bildes mit einem bekannten Bezugsrahmen relativ zu den Vorlagendaten auf Basis der Vorlagen-Koordinatendaten und der extrahierten Koordinatendaten (38; 50; 62; 71; 80; 89; 98; 107; 118);
- Extrahieren von Zusatzdaten für die Gruppe nicht zusammenhängender Merkmale (39; 51; 63) aus dem abgeglichenen biometrischen Bild; und
- Bereitstellen der extrahierten Zusatzdaten für die Smart Card bzw. für den Authentifizierungs-Server (40; 52; 64; 73; 82; 91; 100; 109), um sie mit den Vorlagen-Zusatzdaten für die Gruppe nicht zusammenhängender Merkmale abzustimmen.

2. Verfahren nach Anspruch 1, **dadurch gekennzeichnet, dass** die nicht zusammenhängenden Merkmale der Vorlage Details enthalten, für die Daten in der Vorlage aufgezeichnet sind.

3. Verfahren nach Anspruch 2, **dadurch gekennzeichnet, dass** die nicht zusammenhängenden Merkmale der Vorlage nur Details enthalten, für die Daten in der Vorlage aufgezeichnet sind.

4. Verfahren nach einem der vorangehenden Ansprüche, **dadurch gekennzeichnet, dass** die nicht zusammenhängenden Merkmale der Vorlage falsche Merkmale enthalten, für die Daten andere als die in der Vorlage gespeicherten sind.

5. Verfahren nach Anspruch 4, das den Schritt des Identifizierens von Positionen falscher Merkmale umfasst.

6. Verfahren nach Anspruch 4, das den Schritt des Identifizierens von Positionen falscher Merkmale umfasst, und **dadurch gekennzeichnet, dass** die extrahierten biometrischen Daten Daten enthalten, die sich auf Positionen von Merkmalen beziehen, die als Positionen falscher Merkmale identifiziert sind.

7. Verfahren nach einem der vorangehenden Ansprüche, **dadurch gekennzeichnet, dass** die extrahierten Merkmal-Koordinatendaten Detail-Positionen von Details einschließen, die sich innerhalb des biometrischen Bildes befinden.

8. Verfahren nach einem der vorangehenden Ansprüche, **dadurch gekennzeichnet, dass** die extrahierten Zusatzdaten der Smart Card in der gleichen Reihenfolge von Merkmalen, wie der Reihenfolge der bereitgestellten Vorlagen-Koordinatendaten bereitgestellt werden.

9. Verfahren nach einem der vorangehenden Ansprüche, **dadurch gekennzeichnet, dass** die Zusatzdaten die Detail-Richtungen für jedes Detail enthalten, für die ein Vorlagen-Koordinatendatenelement von der Smart Card empfangen wurde.

10. Verfahren nach einem der vorangehenden Ansprüche, **dadurch gekennzeichnet, dass** die Vielzahl nicht zusammenhängender Merkmale wenigstens 10 Merkmale enthält.

11. Verfahren nach Anspruch 10, **dadurch gekennzeichnet, dass** die Vielzahl nicht zusammenhängender Merkmale alle Merkmale wenigstens eines Merkmaltyps enthält.

12. Verfahren nach einem der vorangehenden Ansprüche, **dadurch gekennzeichnet, dass** die Vielzahl nicht zusammenhängender Merkmale so ausgewählt werden, dass sie gleichmäßige Verteilung zur Identifizierung von Bereichen höherer Merkmaldichte ermöglicht.

13. Verfahren nach einem der vorangehenden Ansprüche, **dadurch gekennzeichnet, dass** die Vielzahl nicht zusammenhängender Merkmale so ausgewählt werden, dass Distanzen zwischen ihnen zur Verwendung bei der Abgleichung maximiert werden, um Winkelabgleichfehler zu reduzieren.

14. Verfahren nach einem der vorangehenden Ansprüche, das den Schritt des Bereitstellens einer Kennung für die Smart Card umfasst, wobei die Kennung zur Verwendung beim Bestimmen der Vorlage dient.

15. Verfahren nach Anspruch 14, das den Schritt des Bestimmens einer Vorlage, die mit der bereitgestellten Kennung zusammenhängt, als die Vorlage und des Abrufens der Vorlagen-Koordinatendaten aus der Vorlage umfasst.

16. Verfahren nach einem der vorangehenden Ansprüche, das den Schritt des Vorverarbeitens des biometrischen Bildes mit dem Host-Prozessor umfasst.

17. Verfahren nach Anspruch 16, **dadurch gekennzeichnet, dass** die Vorverarbeitung der biometrischen Daten durchgeführt wird, um potenziell falsche Merkmale aus dem biometrischen Bild (36; 48; 60; 69; 78; 87; 96; 105) zu eliminieren.

18. Verfahren nach Anspruch 1, das die folgenden Schritte umfasst:

   - Korrelieren der empfangenen extrahierten biometrischen Zusatzdaten und der in der Vorlage gespeicherten Vorlagen-Zusatrdaten (41; 53; 65; 74; 83; 92; 101; 110; 121);
   - Durchführen wenigstens eines Schrittes des Identifizierens eines Individuums oder eines anderen Schrittes als den des Identifizierens des Individuums in Abhängigkeit von einem Ergebnis des Schrittes des Korrelierens (42; 54; 66; 75; 84; 93; 102; 111; 122).

19. Verfahren nach einem der vorangehenden Ansprüche, das die folgenden Schritte umfasst:

   - Korrelieren der empfangenen extrahierten biometrischen Zusatzdaten und der in der Vorlage gespeicherten Vorlagen-Zusatzdaten;
   - wenn eine Korrelation ein autorisiertes Individuum anzeigt, Abrufen von Daten von der Smart Card zur Bereitstellung für den Host-Prozessor.

20. Verfahren nach einem der vorangehenden Ansprüche, das die folgenden Schritte umfasst:

   - Korrelieren der empfangenen extrahierten biometrischen Zusatzdaten und der in der Vorlage gespeicherten Vorlagen-Zusatzdaten;
   - wenn eine Korrelation ein autorisiertes Individuum anzeigt, Durchführen eines sicherheitsbezogenen Prozesses auf der Smart Card, wobei der sicherheitsbezogene Prozess zum Zugreifen auf sichere Daten dient und die sicheren Daten nur bei einem erfolgreichen Schritt des Korrelierens zugänglich sind, der ein autorisiertes Individuum anzeigt.

**21.** Verfahren nach einem der vorangehenden Ansprüche, **dadurch gekennzeichnet, dass** das biometrische Bild ein Fingerabdruckbild ist.

**22.** Verfahren nach einem der vorangehenden Ansprüche, **dadurch gekennzeichnet, dass** das biometrische Bild innerhalb jedes einer Vielzahl bekannter Bezugsrahmen abgeglichen wird, und **dadurch gekennzeichnet, dass** extrahierte biometrische Zusatzdaten der Smart Card innerhalb jedes der Vielzahl von Bezugsrahmen bereitgestellt werden.

**23.** Verfahren nach einem der vorangehenden Ansprüche, das den folgenden Schritt umfasst:

- Registrieren biometrischer Daten mit einer Vorlage auf einer Smart Card, das einschließt:
- Bereitstellen (35; 47; 59; 68; 77; 86; 95; 104) von Abgleichdaten, die Koordinaten zur Übertragung von der Smart Card enthalten.

**24.** Verfahren nach einem der vorangehenden Ansprüche, **dadurch gekennzeichnet, dass** die Vorlagen-Koordinatendaten Koordinaten sind, die gegenüber Merkmalkoordinaten um einen festen Versatz versetzt sind.

**25.** Verfahren nach Anspruch 24, das die folgenden Schritte umfasst:

- Empfangen von Merkmaldaten; und
- Umwandeln der Merkmaldaten entsprechend dem Versatz.

**26.** Verfahren nach einem der Ansprüche 24 und 25, das die folgenden Schritte umfasst:

- Bereitstellen biometrischer Musterdaten, die sich auf wenigstens ein Muster biometrischer Informationen beziehen;
- Extrahieren von Merkmaldaten, die sich auf jedes einer Vielzahl von Merkmalen beziehen, aus den biometrischen Musterdaten;
- Bereitstellen einer Transformationsfunktion F, wobei die Transformationsfunktion von einer Charakteristik wenigstens eines der Vielzahl von Merkmalen abhängt und die Charakteristik aus der Vielzahl von Merkmalen bestimmt werden kann, jedoch nicht aus einem Ergebnis der Transformationsfunktion allein bestimmt werden kann; und
- Transformieren von wenigstens zwei der Vielzahl von Merkmalen entsprechend der Transformationsfunktion F, wodurch transformierte Merkmale entstehen, die mit den Abgleichdaten abgeglichen werden.

**27.** Verfahren nach Anspruch 26, wobei die Transformationsfunktion eine Funktion eines ausgewählten internen Bezugsmerkmals ist und das interne Bezugsmerkmal in der Vielzahl biometrischer Merkmale enthalten ist.

**28.** Verfahren nach Anspruch 26 oder 27, wobei die Transformationsfunktion eine Funktion ist, die von einer Charakteristik jedes Merkmals außer einer Position desselben abhängt.

**29.** Verfahren nach einem der Ansprüche 26 bis 28, wobei die Vielzahl von Merkmalen Fingerabdruck-Details enthält.

**30.** Verfahren nach einem der Ansprüche 26 bis 29, wobei die Transformationsfunktion eine Funktion einer Position der Fingerabdruck-Details und wenigstens einer Ausrichtung oder eines Typs der Fingerabdruck-Details ist.

**31.** Verfahren nach einem der Ansprüche 26 bis 29, wobei die Transformationsfunktion F die folgende Form hat:

$$F(M_i, r, t) = (X_i + r*\cos(A_i + t), Y_i + r*\sin(A_i + t))$$

wobei
r und t Zufallsparameter sind;
$M_i$ Details i darstellt;
$(X_i, Y_i)$ die Position von Details i angibt; und
$(A_i)$ die Richtung von Details i angibt.

**32.** Verfahren nach einem der Ansprüche 26 bis 29, wobei die Transformationsfunktion F die folgende Form hat:

$$F(Mk, Mi) = (Xi + ri*cos(Ai), Yi + ri*sin(Ai))$$

wobei ri = |Mk - Mi|;
Mi Details i darstellt;
(Xi, Yi) die Position von Details i angibt; und
(Ai) die Richtung von Details i angibt.

**33.** Verfahren nach einem der Ansprüche 26 bis 29, wobei die Transformationsfunktion F die folgende Form hat:

$$F(Mk, Mi) = (Xi + ri*cos(Ai - Ak), Yi + ri*sin(Ai - Ak))$$

wobei ri = |Mk - Mi|;
Mi Details i darstellt;
(Xi, Yi) die Position von Details i angibt; und
(Ai) die Richtung von Details i angibt.

**34.** Verfahren nach einem der Ansprüche 26 bis 29, wobei die Transformationsfunktion F die folgende Form hat:

$$F(Mk, Mi) = (Xi + Rx, Yi + Ry)$$

wobei Rx eine willkürliche Funktion von Xi - Xk ist;
Ry eine willkürliche Funktion von Yi - Yk ist;
Mi Details i darstellt; und
(Xi, Yi) die Position von Details i angibt.

**35.** Verfahren nach einem der Ansprüche 26 bis 29, wobei die Transformationsfunktion die folgende Form hat:

$$F(Mk, Mi) = (Xi + Rx, Yi + Ry, Ai + A)$$

Rx eine willkürliche Funktion von Xi - Xk ist;
Ry eine willkürliche Funktion von Yi - Yk ist;
A eine willkürliche Funktion von Ai - Ak ist;
Mi Details i darstellt;
(Xi, Yi) die Position von Details i angibt; und
(Ai) die Richtung von Details i angibt.

**36.** Verfahren nach einem der Ansprüche 26 bis 29, wobei die Transformationsfunktion F die folgende Form hat:

$$F(Mi, r, D) = (Xi + r*cos(Ai + D), Yi + r*sin(Ai + D))$$

wobei r und t Zufallsparameter sind;
D bestimmt wird;
Mi Details i darstellt;
(Xi, Xi) die Position von Details i ist; und
(Ai) die Richtung von Details i ist.

**37.** Verfahren nach Anspruch 23 oder 24, **dadurch gekennzeichnet, dass** die Koordinaten Koordinaten sind, die gegenüber Merkmalkoordinaten um einen Versatz i und in einer Richtung versetzt sind, wobei wenigstens der Versatz oder die Richtung von einer Charakteristik des Merkmals abhängt.

**38.** Verfahren nach einem der Ansprüche 23, 24 und 37, das die folgenden Schritte umfasst:

- Empfangen von Merkmaldaten; und
- Umwandeln der Merkmaldaten entsprechend dem Versatz und der Richtung.

**39.** Verfahren nach Anspruch 23, das die folgenden Schritte umfasst:

- Empfangen von Daten, die sich auf identifizierte Positionen falscher Merkmale beziehen; und
- Verifizieren, dass die Merkmal-Positionen, die als Positionen falscher Merkmale identifiziert worden sind, Positionen falscher Merkmale entsprechen.

**40.** Verfahren nach Anspruch 23, **dadurch gekennzeichnet, dass** die biometrischen Daten Daten enthalten, die innerhalb jedes einer Vielzahl bekannter Bezugsrahmen bestimmt werden, und **dadurch gekennzeichnet, dass** der Schritt des Korrelierens durchgeführt wird, um die Daten innerhalb des bekannten Bezugsrahmens zu identifizieren und die Daten mit Daten aus der Vorlage zu korrelieren.

**41.** Verfahren nach Anspruch 22, **dadurch gekennzeichnet, dass** die Vielzahl bekannter Bezugsrahmen zwei bekannte Bezugsrahmen einschließt.

**42.** Smart Card zum Durchführen biometrischer Identifizierung darauf, die umfasst:

- einen Sendeempfänger zum Senden von Daten von der Smart Card und zum Empfangen von Daten, die der Smart Card bereitgestellt werden;
- einen Prozessor; und
- einen Speicher zum Speichern von Vorlagendaten, die sich auf ein biometrisches Bild beziehen und zum Speichern von Daten, die sich auf Befehle zur Ausführung durch den Prozessor beziehen, wobei die Befehle Befehle zum Durchführen der folgenden Schritte umfassen:

  - Bereitstellen (35; 47; 59; 68; 77; 86; 95; 104) von Abgleichdaten, die Koordinaten nicht zusammenhängender Merkmale der Vorlage enthalten, für den Sendeempfänger zum Senden von der Smart Card, wobei die Abgleichdaten zur Verwendung durch einen anderen Prozessor beim Abgleichen er fasster biometrischer Daten innerhalb eines bekannten Bezugsrahmens dienen,
  - Empfangen biometrischer Zusatzdaten, die innerhalb des bekannten Bezugsrahmens abgeglichen werden, wobei die biometrischen Daten von einer anderen Position als innerhalb der Smart Card empfangen werden und sich auf Charakteristiken von Merkmalen des biometrischen Bildes beziehen; und
  - Korrelieren (41; 53; 65; 74; 83; 92; 101; 110) der empfangenen biometrischen Daten mit Vorlagen-Zusatzdaten, die in dem Speicher gespeichert sind, wobei das Korrelieren innerhalb der Smart Card durchgeführt wird; und
  - Durchführen von Identifizieren oder Autorisieren (42; 54; 66; 75; 84; 93; 102; 111; 122) eines Individuums in Abhängigkeit von dem Schritt des Korrelierens.

**43.** Biometrische Bilderzeugungsstation zum Einsatz mit einer tragbaren elektronischen Einrichtung beim Durchführen von biometrischer Identifizierung an der tragbaren elektronischen Einrichtung, wobei sie umfasst:

- einen biometrischen Sensor zum Erfassen (33; 45; 57; 67; 76; 85; 94; 103; 112) eines Bildes einer Quelle biometrischer Informationen, um erfasste biometrische Bilddaten bereitzustellen;
- einen Sendeempfänger zum Senden von Daten zu der tragbaren elektronischen Einrichtung und zum Empfangen von Daten, die von der tragbaren elektronischen Einrichtung bereitgestellt werden;
- einen Speicher zum Speichern von Daten; und
- einen Prozessor zum Durchführen der folgenden Schritte:

  - Empfangen (35; 47; 59; 68; 77; 86; 95; 104) von Abgleichdaten, die Koordinaten nicht zusammenhängender Merkmale der Vorlage enthalten, von dem Sendeempfänger von der tragbaren elektronischen Einrichtung, wobei die Abgleichdaten zur Verwendung durch den Prozessor beim Abgleichen der erfassten biometrischen Daten innerhalb eines bekannten Bezugsrahmens dienen,

- Abgleichen (38; 50; 62; 71; 80; 89; 98; 107; 118) der erfassten biometrischen Bilddaten innerhalb des bekannten Bezugsrahmens,
- Bestimmen (39; 51; 63) biometrischer Zusatzdaten, die sich auf Charakteristiken von Merkmalen beziehen, aus den abgeglichenen biometrischen Bilddaten; und
- Bereitstellen (40; 52; 64; 73; 82; 91; 100; 109) der biometrischen Zusatzdaten auf Basis der abgeglichen biometrischen Bilddaten und innerhalb des bekannten Bezugsrahmens für die tragbare elektronische Einrichtung.

**44.** Speichermedium, auf dem Daten zur Verwendung mit dem biometrischen Bilderzeugungssystem nach Anspruch 43 gespeichert sind, das Befehle zum Durchführen der folgenden Schritte umfasst:

- Empfangen (35; 47; 59; 68; 77; 86; 95; 104) von Abgleichdaten, die Koordinaten nicht zusammenhängender Merkmale der Vorlage enthalten, von dem Sendeempfänger von der tragbaren elektronischen Einrichtung, wobei die Abgleichdaten zur Verwendung durch den Prozessor beim Abgleichen der erfassten biometrischen Daten innerhalb eines bekannten Bezugsrahmens dienen,
- Abgleichen (38; 50; 62; 71; 80; 89; 98; 107; 118) der erfassten biometrischen Bilddaten innerhalb des bekannten Bezugsrahmens,
- Bestimmen (39; 51; 63) biometrischer Zusatzdaten, die sich auf Charakteristiken von Merkmalen beziehen, aus den abgeglichenen biometrischen Bilddaten; und
- Bereitstellen (40; 52; 64; 73; 82; 91; 100; 109) der biometrischen Zusatzdaten auf Basis der abgeglichen biometrischen Bilddaten und innerhalb des bekannten Beizugsrahmens für die tragbare elektronische Einrichtung.

**45.** Biometrisches Identifizierungssystem, das umfasst:

- einen ersten Speicher,
- einen ersten Sendeempfänger;
- einen biometrischen Sensor zum Erfassen (33; 45; 57; 67; 76; 85; 94; 103; 112) eines Bildes einer Quelle biometrischer Informationen und zum Bereitstellen erfasster biometrischer Daten für einen ersten Prozessor;
- wobei der erste Prozessor funktional mit dem ersten Sendeempfänger kommuniziert und der erste Prozessor dazu dient, die folgenden Schritte auszuführen:

  o Empfangen erfasster biometrischer Bilddaten von dem biometrischen Sensor,
  o Empfangen (35; 47; 59; 68; 77; 86; 95; 104) vom Abgleichdaten, die Koordinaten nicht zusammenhängender Merkmale der Vorlage enthalten, von dem ersten Sendeempfänger, wobei die Abgleichdaten zur Verwendung durch den Prozessor beim Abgleichen der erfassten biometrischen Daten innerhalb eines bekannten Bezugsrahmens dienen,
  o Abgleichen (38; 50; 62; 71; 80; 89; 98; 107; 118) der erfassten biometrischen Bilddaten innerhalb des bekannten Bezugsrahmens,
  o Bestimmen (39; 51; 63) biometrischer Zusatzdaten, die sich auf Charakteristiken von Merkmalen beziehen, aus den abgeglichen biometrischen Bilddaten; und
  o Bereitstellen der extrahierten biometrischen Daten auf Basis der abgeglichen biometrischen Bilddaten und innerhalb des bekannten Bezugsrahmens für den ersten Sendeempfänger;

- einen zweiten Speicher zum Speichern biometrischer Vorlagendaten;
- einen zweiten Sendeempfänger, der mit dem ersten Sendeempfänger kommuniziert, um Bilddaten zu ihm zu übertragen und Daten von ihm zu empfangen; und
- einen zweiten Prozessor, der funktional mit dem zweiten Sendeempfänger kommuniziert, wobei der zweite Prozessor dazu dient, die folgenden Schritte durchzuführen:

  o Bereitstellen (40; 52; 64; 73; 82; 91; 100; 109) der Abgleichdaten, die Koordinaten enthalten, für den zweiten Sendeempfänger zum Senden zu dem ersten Sendeempfänger, wobei die Abgleichdaten zur Verwendung durch den ersten Prozessor beim Abgleichen erfasster biometrischer Daten innerhalb eines bekannten Bezugsrahmens dienen,
  o Empfangen der innerhalb des bekannten Bezugsrahmens abgeglichenen biometrischen Zusatzdaten, und
  o Korrelieren (41; 53; 65; 74; 83; 92; 101; 110) der empfangenen biometrischen Zusatzdaten mit Vorlagen-Zusatzdaten, die in dem zweiten Speicher gespeichert sind.

**EP 1 385 118 B1**

**Revendications**

1. Procédé pour mettre en correspondance des données de modèle biométriques mémorisées sur une carte à puce, respectivement sur un serveur d'authentification, comprenant les étapes consistant à :

   - détecter une source biométrique pour fournir une image biométrique à un processeur hôte, respectivement à une station de travail ; dans lequel le processeur hôte, respectivement la station de travail, est en communication avec une carte à puce, respectivement avec un serveur d'authentification, sur lesquels des données de modèle biométriques sont mémorisées, lesdites données de modèle biométriques comprenant des données de coordonnées de particularité de modèle et des données supplémentaires de modèle concernant les caractéristiques des particularités, pour un ensemble de particularités non contiguës ;
   - fournir les données de modèle de coordonnées pour chaque particularité de l'ensemble de particularités non contiguës, de la carte à puce, respectivement du serveur d'authentification, au processeur hôte, respectivement à la station de travail (35 ; 47 ; 59 ; 68 ; 77 ; 86 ; 95 ; 104) ;
   - extraire, de l'image biométrique, des données de coordonnées de particularité pour une corrélation avec l'ensemble de particularités non contiguës ;
   - aligner l'image biométrique dans un cadre de référence connu par rapport aux données de modèle sur la base des données de coordonnées de modèle et des données de coordonnées extraites (38 ; 50 ; 62 ; 71 ; 80 ; 89 ; 98 ; 107 ; 118) ;
   - extraire, de l'image biométrique alignée, des données supplémentaires pour l'ensemble de particularités non contiguës (39 ; 51 ; 63) ; et
   - fournir les données supplémentaires extraites à la carte à puce, respectivement au serveur d'authentification, (40 ; 52 ; 64 ; 73 ; 82 ; 91 ; 100; 109) à mettre en correspondance avec les données supplémentaires de modèle pour l'ensemble de particularités non contiguës.

2. Procédé selon la revendication 1, **caractérisé en ce que** les particularités non contiguës du modèle comprennent un point caractéristique, pour lequel des données sont enregistrées dans le modèle.

3. Procédé selon la revendication 2, **caractérisé en ce que** les particularités non contiguës du modèle ne comprennent que le point caractéristique, pour lequel des données sont enregistrées dans le modèle.

4. Procédé selon l'une quelconque des revendications précédentes, **caractérisé en ce que** les particularités non contiguës du modèle comprennent de fausses particularités pour lesquelles les données sont différentes de celles mémorisées dans le modèle.

5. Procédé selon la revendication 4, comprenant l'étape d'identification d'emplacements de fausses particularités.

6. Procédé selon la revendication 4, comprenant l'étape d'identification d'emplacements de fausses particularités, et **caractérisé en ce que** les données biométriques extraites comprennent des données concernant des emplacements de particularités identifiés en tant qu'emplacements de fausses particularités.

7. Procédé selon l'une quelconque des revendications précédentes, **caractérisé en ce que** les données de coordonnées de particularité extraites comprennent des emplacements de point caractéristique des points caractéristiques situés dans l'image biométrique.

8. Procédé selon l'une quelconque des revendications précédentes, **caractérisé en ce que** les données supplémentaires extraites sont fournies à la carte à puce dans un ordre de particularités identique à l'ordre des données de coordonnées de modèle fournies.

9. Procédé selon l'une quelconque des revendications précédentes, **caractérisé en ce que** les données supplémentaires comprennent les directions de point caractéristique pour chacun des points caractéristiques pour lesquels des données de coordonnées de modèle ont été reçues de la carte à puce.

10. Procédé selon l'une quelconque des revendications précédentes, **caractérisé en ce que** la pluralité de particularités non contiguës comprend au moins 10 particularités.

11. Procédé selon la revendication 10, **caractérisé en ce que** la pluralité de particularités non contiguës comprend toutes les particularités d'au moins un type de particularité.

**12.** Procédé selon l'une quelconque des revendications précédentes, **caractérisé en ce que** la pluralité de particularités non contiguës sont sélectionnées pour prendre en charge une répartition uniforme pour l'identification de régions de densité de particularités plus élevée.

**13.** Procédé selon l'une quelconque des revendications précédentes, **caractérisé en ce que** la pluralité de particularités non contiguës sont sélectionnées pour augmenter au maximum les distances entre elles pour une utilisation lors d'un alignement pour réduire des erreurs d'alignement angulaires.

**14.** Procédé selon l'une quelconque des revendications précédentes, comprenant l'étape de fourniture d'un identifiant à la carte à puce, l'identifiant étant utilisé pour la détermination du modèle.

**15.** Procédé selon la revendication 14 comprenant l'étape consistant à : déterminer un modèle associé à l'identifiant fourni en tant que modèle et récupérer les données de coordonnées de modèle à partir du modèle.

**16.** Procédé selon l'une quelconque des revendications précédentes, comprenant l'étape consistant à prétraiter, par le processeur hôte, l'image biométrique.

**17.** Procédé selon la revendication 16, **caractérisé en ce que** le prétraitement de l'image biométrique est effectué pour éliminer de fausses particularités potentielles de l'image biométrique (36 ; 48 ; 60 ; 69 ; 78 ; 87 ; 96 ; 105).

**18.** Procédé selon la revendication 1, comprenant les étapes consistant à :

- corréler les données supplémentaires biométriques reçues extraites et les données supplémentaires de modèle mémorisées dans le modèle (41 ; 53 ; 65 ; 74 ; 83 ; 92 ; 101 ; 110 ; 121) ;
- effectuer au moins une étape d'identification d'un individu et autre que d'identification de l'individu sur la base d'un résultat de l'étape de corrélation (42 ; 54 ; 66 ; 75 ; 84 ; 93 ; 102 ; 111 ; 122).

**19.** Procédé selon l'une quelconque des revendications précédentes, comprenant les étapes consistant à :

- corréler les données supplémentaires biométriques reçues extraites et les données supplémentaires de modèle mémorisées dans le modèle ;
- lorsqu'une corrélation est indicative d'un individu autorisé, récupérer les données de la carte à puce pour les fournir au processeur hôte.

**20.** Procédé selon l'une quelconque des revendications précédentes, comprenant les étapes consistant à :

- corréler les données supplémentaires biométriques reçues extraites et les données supplémentaires de modèle mémorisées dans le modèle ;
- lorsqu'une corrélation est indicative d'un individu autorisé, exécuter un processus associé à la sécurité sur la carte à puce, le processus associé à la sécurité étant utilisé pour accéder à des données sécurisées, les données sécurisées n'étant accessibles que lors d'une étape de corrélation réussie indicative d'un individu autorisé.

**21.** Procédé selon l'une quelconque des revendications précédentes, **caractérisé en ce que** l'image biométrique est une image d'empreinte digitale.

**22.** Procédé selon l'une quelconque des revendications précédentes, **caractérisé en ce que** l'image biométrique est alignée dans chacun d'une pluralité de cadres de référence connus, et **caractérisé en ce que** des données supplémentaires biométriques extraites sont fournies à la carte à puce dans chacun de la pluralité de cadres de référence.

**23.** Procédé selon l'une quelconque des revendications précédentes, comprenant l'étape consistant à :

- enregistrer des données biométriques avec un modèle sur une carte à puce consistant à :
- fournir (35 ; 47 ; 59 ; 68 ; 77 ; 86 ; 95 ; 104) des données d'alignement comprenant des coordonnées pour une transmission à partir de la carte à puce.

**24.** Procédé selon l'une quelconque des revendications précédentes, **caractérisé en ce que** les données de coordonnées de modèle sont des coordonnées décalées par rapport aux coordonnées de particularité avec un décalage fixe.

**25.** Procédé selon la revendication 24, comprenant les étapes consistant à :

- recevoir des données de particularité ; et
- transformer les données de particularité en fonction du décalage.

**26.** Procédé selon l'une quelconque des revendications 24 et 25, comprenant les étapes consistant à :

- fournir des données biométriques d'échantillon concernant au moins un échantillon d'informations biométriques ;
- extraire à partir des données biométriques d'échantillon des données de particularité concernant chacune d'une pluralité de particularités ;
- fournir une fonction de transformation F, la fonction de transformation dépendant d'une caractéristique d'au moins l'une de la pluralité de particularités, la caractéristique pouvant être déterminée à partir de la pluralité de particularités, mais ne pouvant pas être déterminée à partir d'un résultat de la fonction de transformation uniquement ; et
- transformer au moins deux de la pluralité de particularités conformément à la fonction de transformation F, résultant en des particularités transformées alignées avec les données d'alignement.

**27.** Procédé selon la revendication 26, dans lequel la fonction de transformation est une fonction d'une particularité de référence interne sélectionnée, la particularité de référence interne étant incluse dans la pluralité de particularités biométriques.

**28.** Procédé selon la revendication 26 ou 27, dans lequel la fonction de transformation est une fonction dépendant d'une caractéristique de chaque particularité autre qu'un emplacement de celle-ci.

**29.** Procédé selon l'une quelconque des revendications 26 à 28, dans lequel la pluralité de particularités comprennent un point caractéristique d'empreinte digitale.

**30.** Procédé selon l'une quelconque des revendications 26 à 29, dans lequel la fonction de transformation est une fonction d'un emplacement du point caractéristique d'empreinte digitale et d'au moins l'un d'une orientation et d'un type du point caractéristique d'empreinte digitale.

**31.** Procédé selon l'une quelconque des revendications 26 à 29, dans lequel la fonction de transformation F a la forme :

$$F(Mi,r,t) = (Xi + r*cos(Ai + t), Yi + r*sin(Ai + t))$$

où
r et t sont des paramètres aléatoires ;
Mi représente le point caractéristique i ;
(Xi, Yi) est l'emplacement du point caractéristique i ; et
(Ai) est la direction du point caractéristique i.

**32.** Procédé selon l'une quelconque des revendications 26 à 29, dans lequel la fonction de transformation F a la forme :

$$F(Mk, Mi) = (Xi + ri*cos(Ai), Yi + ri*sin(Ai))$$

où ri = |Mk - Mi| ;
Mi représente le point caractéristique i ;
(Xi, Yi) est l'emplacement du point caractéristique i ; et
(Ai) est la direction du point caractéristique i.

**33.** Procédé selon l'une quelconque des revendications 26 à 29, dans lequel la fonction de transformation F a la forme :

$$F(Mk, Mi) = (Xi + ri*cos(Ai - Ak), Yi + ri*sin(Ai - Ak))$$

où ri = |Mk - Mi| ;
Mi représente le point caractéristique i ;
(Xi, Yi) est l'emplacement du point caractéristique i ; et
(Ai) est la direction du point caractéristique i.

**34.** Procédé selon l'une quelconque des revendications 26 à 29, dans lequel la fonction de transformation F a la forme :

$$F(Mk, Mi) = (Xi + Rx, Yi + Ry)$$

où Rx est une fonction arbitraire de Xi - Xk ;
Ry est une fonction arbitraire de Yi - Yk ;
Mi représente le point caractéristique i ; et
(Xi, Y) est l'emplacement du point caractéristique i.

**35.** Procédé selon l'une quelconque des revendications 26 à 29, dans lequel la fonction de transformation F a la forme :

$$F(Mk, Mi) = (Xi + Rx, Yi + Ry, Ai + A)$$

Rx est une fonction arbitraire de Xi - Xk ;
Ry est une fonction arbitraire de Yi - Yk ;
A est une fonction arbitraire de Ai - Ak ;
Mi représente le point caractéristique i ;
(Xi, Yi) est l'emplacement du point caractéristique i ; et
(Ai) est la direction du point caractéristique i.

**36.** Procédé selon l'une quelconque des revendications 26 à 29, dans lequel la fonction de transformation F a la forme :

$$F(Mi, r, D) = (Xi + r*cos(Ai + D), Yi + r*sin(Ai + D))$$

où r et t sont des paramètres aléatoires ;
D est déterminé ;
Mi représente le point caractéristique i ;
(Xi, Yi) est l'emplacement du point caractéristique i ; et
(Ai) est la direction du point caractéristique i.

**37.** Procédé selon la revendication 23 ou 24, **caractérisé en ce que** les coordonnées sont des coordonnées décalées par rapport aux coordonnées de particularité d'un décalage et dans une direction, au moins l'un du décalage et de la direction étant fonction d'une caractéristique de la particularité.

**38.** Procédé selon l'une quelconque des revendications 23, 24 et 37 comprenant les étapes consistant à :

- recevoir des données de particularité ; et
- transformer les données de particularité en fonction du décalage et de la direction.

**39.** Procédé selon la revendication 23, comprenant les étapes consistant à :

- recevoir des données concernant les emplacements de fausses particularités identifiés ; et
- vérifier que les emplacements de particularités identifiés en tant qu'emplacements de fausses particularités correspondent à des emplacements de fausses particularités.

**40.** Procédé selon la revendication 23, **caractérisé en ce que** les données biométriques comprennent des données déterminées dans chacun d'une pluralité de cadres de référence connus, et **caractérisé en ce que** l'étape de corrélation est effectuée pour identifier les données dans le cadre de référence connu et pour corréler ces données avec les données du modèle.

**41.** Procédé selon la revendication 22, **caractérisé en ce que** la pluralité de cadres de référence connus comprend deux cadres de référence connus.

**42.** Carte à puce pour effectuer une identification biométrique sur celle-ci comprenant :

- un émetteur-récepteur pour transmettre des données à partir de la carte à puce et pour recevoir des données fournies à la carte à puce ;
- un processeur ; et
- une mémoire pour mémoriser des données de modèle concernant une image biométrique et pour mémoriser des données concernant des instructions pour une exécution par le processeur, les instructions comprenant des instructions pour effectuer les étapes consistant à :

- fournir (35 ; 47 ; 59 ; 68 ; 77 ; 86 ; 95 ; 104) des données d'alignement comprenant des coordonnées de particularités non contiguës du modèle à l'émetteur-récepteur pour une transmission à partir de la carte à puce, les données d'alignement étant utilisées par un autre processeur pour l'alignement des données biométriques détectées dans un cadre de référence connu,
- recevoir des données biométriques supplémentaires alignées dans le cadre de référence connu, les données biométriques étant reçues d'un emplacement autre que dans la carte à puce et concernant des caractéristiques de particularités de l'image biométrique ; et
- corréler (41 ; 53 ; 65 ; 74 ; 83 ; 92 ; 101 ; 110) les données biométriques reçues avec des données supplémentaires de modèle mémorisées dans la mémoire, la corrélation étant effectuée dans la carte à puce ; et
- effectuer l'une de l'identification et de l'autorisation (42 ; 54 ; 66 ; 75 ; 84 ; 93 ; 102 ; 111; 122) d'un individu en fonction de l'étape de corrélation.

**43.** Station d'imagerie biométrique pour une utilisation avec un dispositif électronique portable pour effectuer une identification biométrique sur le dispositif électronique portable, comprenant :

- un capteur biométrique pour détecter (33 ; 45 ; 57 ; 67 ; 76 ; 85 ; 94 ; 103 ; 112) une image d'une source d'informations biométriques pour fournir les données d'image biométriques détectées ;
- un émetteur-récepteur pour transmettre les données au dispositif électronique portable et pour recevoir les données fournies par le dispositif électronique portable ;
- une mémoire pour mémoriser les données ; et
- un processeur pour exécuter les étapes consistant à :

- recevoir (35 ; 47 ; 59 ; 68 ; 77 ; 86 ; 95 ; 104) des données d'alignement comprenant des coordonnées de particularités non contiguës du modèle de l'émetteur-récepteur du dispositif électronique portable, les données d'alignement étant utilisées par le processeur pour l'alignement des données biométriques détectées dans un cadre de référence connu,
- aligner (38 ; 50 ; 62 ; 71 ; 80 ; 89 ; 98 ; 107 ; 118) les données d'image biométriques détectées dans le cadre de référence connu,
- déterminer (39 ; 51 ; 63) à partir des données d'image biométriques alignées des données biométriques supplémentaires concernant des caractéristiques de particularités, et
- fournir (40 ; 52 ; 64 ; 73 ; 82 ; 91 ; 100 ; 109) les données biométriques supplémentaires basées sur les données d'image biométriques alignées et dans le cadre de référence connu du dispositif électronique portable.

**44.** Support de mémorisation sur lequel des données sont mémorisées pour une utilisation avec la station d'imagerie biométrique de la revendication 43 et comprenant des instructions pour exécuter les étapes consistant à :

- recevoir (35 ; 47 ; 59 ; 68 ; 77 ; 86 ; 95 ; 104) des données d'alignement comprenant des coordonnées de particularités non contiguës du modèle de l'émetteur-récepteur du dispositif électronique portable, les données d'alignement étant utilisées par le processeur pour l'alignement des données biométriques détectées dans un cadre de référence connu,

- aligner (38 ; 50 ; 62 ; 71 ; 80 ; 89 ; 98 ; 107 ; 118) les données d'image biométriques détectées dans le cadre de référence connu,

- déterminer (39 ; 51 ; 63) à partir des données d'image biométriques alignées des données biométriques supplémentaires concernant des caractéristiques de particularités, et

- fournir (40 ; 52 ; 64 ; 73 ; 82 ; 91 ; 100 ; 109) les données biométriques supplémentaires basées sur les données d'image biométriques alignées et dans le cadre de référence connu du dispositif électronique portable.

**45.** Système d'identification biométrique comprenant :

- une première mémoire ;
- un premier émetteur-récepteur ;
- un capteur biométrique pour détecter (33 ; 45 ; 57 ; 67 ; 76 ; 85 ; 94 ; 103 ; 112) une image d'une source d'informations biométriques, et pour fournir les données d'image biométriques détectées à un premier processeur ;
- ledit premier processeur étant en communication fonctionnelle avec le premier émetteur-récepteur, le premier processeur étant utilisé pour exécuter les étapes consistant à :

- recevoir des données d'image biométriques détectées du capteur biométrique,
- recevoir (35 ; 47 ; 59 ; 68 ; 77 ; 86 ; 95 ; 104) des données d'alignement comprenant des coordonnées de particularités non contiguës du modèle du premier émetteur-récepteur, les données d'alignement étant utilisées par le processeur pour l'alignement des données d'image biométriques détectées dans un cadre de référence connu,
- aligner (38 ; 50 ; 62 ; 71 ; 80 ; 89 ; 98 ; 107 ; 118) les données d'image biométriques détectées dans le cadre de référence connu,
- déterminer (39 ; 51 ; 63) à partir des données d'image biométriques alignées des données biométriques supplémentaires concernant des caractéristiques de particularités, et
- fournir les données biométriques extraites basées sur les données d'image biométriques alignées et dans le cadre de référence connu au premier émetteur-récepteur,

- une deuxième mémoire pour mémoriser des données de modèle biométriques ;
- un deuxième émetteur-récepteur en communication avec le premier émetteur-récepteur pour transmettre des données à celui-ci et pour recevoir des données de celui-ci ; et
- un deuxième processeur en communication fonctionnelle avec le deuxième émetteur-récepteur, le deuxième processeur étant utilisé pour effectuer les étapes consistant à :

- fournir (40 ; 52 ; 64 ; 73 ; 82 ; 91 ; 100 ; 109) lesdites données d'alignement comprenant des coordonnées au deuxième émetteur-récepteur pour une transmission au premier émetteur-récepteur, les données d'alignement étant utilisées par le premier processeur pour l'alignement des données biométriques détectées dans un cadre de référence connu,
- recevoir lesdites données biométriques supplémentaires alignées dans le cadre de référence connu, et
- corréler (41 ; 53 ; 65 ; 74 ; 83 ; 92 ; 101 ; 110) les données biométriques supplémentaires reçues avec des données supplémentaires de modèle mémorisées dans la deuxième mémoire.

CAPTURE FINGERPRINT IMAGE 10

ADJUST CONTRAST 11

FILTER IMAGE 12

EXTRACT CORE 13

DETERMINE CORE LOCATION AND ORIENTATION 14

ORIENT IMAGE SUCH THAT CORE HAS PREDETERMINED LOCATION AND ORIENTATION 15

EXTRACT OTHER FEATURES 16

COMPARE EXTRACTED FEATURES TO TEMPLATE TO DETERMINE LIKELIHOOD OF MATCH 17

IF MATCH IS LIKELY, IDENTIFY OR AUTHORIZE USER 18

Figure 1
(PRIOR ART)

```
┌────────────────────────────────────────┐
│  STORE PUBLIC PORTION OF FINGERPRINT IMAGE │〜20
└────────────────────────────────────────┘
                    │
                    ▼
┌────────────────────────────────────────┐
│  STORE PRIVATE PORTION OF TEMPLATE      │〜21
└────────────────────────────────────────┘
                    │
                    ▼
┌────────────────────────────────────────┐
│  SENSE IMAGE OF FINGERPRINT             │〜22
└────────────────────────────────────────┘
                    │
                    ▼
┌────────────────────────────────────────┐
│  RECEIVE PIN                            │〜23
└────────────────────────────────────────┘
                    │
                    ▼
┌────────────────────────────────────────┐
│  PROVIDE PIN TO SMARTCARD               │〜24
└────────────────────────────────────────┘
                    │
                    ▼
┌────────────────────────────────────────┐
│  BASED ON PIN, PROVIDE PUBLIC PORTION OF │〜25
│  FINGERPRINT IMAGE TO HOST PROCESSOR    │
└────────────────────────────────────────┘
                    │
                    ▼
┌────────────────────────────────────────┐
│  ALIGN SENSED IMAGE WITH PORTION OF FINGERPRINT │〜26
│  IMAGE RECEIVED FROM SMARTCARD          │
└────────────────────────────────────────┘
                    │
                    ▼
┌────────────────────────────────────────┐
│  EXTRACT FROM ALIGNED IMAGE AN IMAGE PORTION FROM │〜27
│  WHICH THE PRIVATE TEMPLATE IS DERIVED  │
└────────────────────────────────────────┘
                    │
                    ▼
┌────────────────────────────────────────┐
│  PROVIDING THE IMAGE PORTION TO THE SMARTCARD │〜28
└────────────────────────────────────────┘
                    │
                    ▼
┌────────────────────────────────────────┐
│  COMPARING THE IMAGE PORTION PROVIDED TO THE SMARTCARD │〜29
│  WITH THE PRIVATE PORTION OF THE TEMPLATE TO DETERMINE │
│  LIKELIHOOD OF MATCH                    │
└────────────────────────────────────────┘
                    │
                    ▼
┌────────────────────────────────────────┐
│  IF MATCH IS LIKELY, IDENTIFY OR AUTHORIZE USER │〜30
└────────────────────────────────────────┘
```

Figure 2
(PRIOR ART)

```
                    ┌─────────────────────┐
                    │     PROVIDE PIN     │────31
                    └─────────────────────┘
                              │
                              ▼
          ┌───────────────────────────────────────┐
          │       PROVIDE PIN TO SMARTCARD        │────32
          └───────────────────────────────────────┘
                              │
                              ▼
            ┌───────────────────────────────────┐
            │      SENSING A BIOMETRIC IMAGE     │────33
            └───────────────────────────────────┘
                              │
                              ▼
      ┌───────────────────────────────────────────────┐
      │ FROM A TEMPLATE ASSOCIATED WITH THE RECEIVED   │────34
      │ PIN, RETRIEVE SEVERAL FEATURE LOCATIONS        │
      └───────────────────────────────────────────────┘
                              │
                              ▼
      ┌───────────────────────────────────────────────┐
      │  PROVIDE FEATURE LOCATIONS TO HOST PROCESSOR   │────35
      └───────────────────────────────────────────────┘
                              │
                              ▼
      ┌───────────────────────────────────────────────┐
      │    PREPROCESS IMAGE ON HOST PROCESSOR          │────36
      └───────────────────────────────────────────────┘
                              │
                              ▼
      ┌───────────────────────────────────────────────┐
      │  EXTRACT FEATURES FROM IMAGE ON HOST PROCESSOR │────37
      └───────────────────────────────────────────────┘
                              │
                              ▼
      ┌───────────────────────────────────────────────┐
      │ ALIGN FEATURE LOCATIONS OF EXTRACTED FEATURES  │────38
      │ AND THOSE PROVIDED FROM THE SMARTCARD TO       │
      │ ORIENT THE SENSED IMAGE                        │
      └───────────────────────────────────────────────┘
                              │
                              ▼
      ┌───────────────────────────────────────────────┐
      │ DETERMINING AT LEAST A PARAMETER ASSOCIATED    │────39
      │ WITH EACH FEATURE A LOCATION OF WHICH IS       │
      │ PROVIDED FROM THE SMARTCARD                    │
      └───────────────────────────────────────────────┘
                              │
                              ▼
      ┌───────────────────────────────────────────────┐
      │  PROVIDING THE AT LEAST A PARAMETER IN A       │────40
      │  PREDETERMINED ORDER TO THE SMARTCARD          │
      └───────────────────────────────────────────────┘
                              │
                              ▼
      ┌───────────────────────────────────────────────┐
      │ COMPARING THE RECEIVED AT LEAST A PARAMETER    │────41
      │ WITH PARAMETERS STORED WITHIN THE TEMPLATE     │
      │ ASSOCIATED WITH THE RECEIVED PIN TO DETERMINE  │
      │ LIKELIHOOD OF MATCH                            │
      └───────────────────────────────────────────────┘
                              │
                              ▼
      ┌───────────────────────────────────────────────┐
      │ IF MATCH IS LIKELY, IDENTIFY OR AUTHORIZE USER │────42
      └───────────────────────────────────────────────┘
```

Figure 3

| Feature | X-loc | Y-loc | Orientation | Type |
|---------|-------|-------|-------------|------|
| Core | 0 | 0 | 0 | whirl |
| Minutia | 4 | 4 | 34 | 2 |
| Minutia | -4 | -1 | 306 | 1 |
| Minutia | 1 | -4 | 270 | 1 |
| Minutia | 12 | -1 | 165 | 2 |
| Minutia | -14 | 4 | 12 | 2 |
| Minutia | 34 | -40 | 287 | 1 |
| Minutia | 6 | 32 | 73 | 2 |
| Minutia | -3 | -44 | 102 | 2 |
| Minutia | 18 | -22 | 56 | 1 |
| Minutia | 12 | -1 | 156 | 1 |
| Minutia | -26 | 9 | 43 | 2 |
| Minutia | 22 | -28 | 298 | 1 |

Figure 4

PROVIDE PIN ⌇43

↓

PROVIDE PIN TO SMARTCARD ⌇44

↓

SENSING A BIOMETRIC IMAGE ⌇45

↓

FROM A TEMPLATE ASSOCIATED WITH THE RECEIVED PIN, RETRIEVE 12 MINUTIA LOCATIONS ⌇46

↓

PROVIDE MINUTIA LOCATIONS TO HOST PROCESSOR ⌇47

↓

PREPROCESS IMAGE ON HOST PROCESSOR ⌇48

↓

EXTRACT MINUTIA'S FROM IMAGE ON HOST PROCESSOR ⌇49

↓

ALIGN MINUTIA LOCATIONS OF EXTRACTED MINUTIA'S AND THOSE PROVIDED FROM THE SMARTCARD TO ORIENT THE SENSED IMAGE ⌇50

↓

DETERMINING ANGLE OF EACH MINUTIA, A LOCATION OF WHICH IS PROVIDED FROM THE SMARTCARD ⌇51

↓

PROVIDING THE ANGLE IN A SAME ORDER AS THE LOCATIONS PROVIDED FROM THE SMARTCARD TO THE SMARTCARD ⌇52

↓

COMPARING THE RECEIVED ANGLES WITH ANGLES STORED WITHIN THE TEMPLATE ASSOCIATED WITH THE RECEIVED PIN TO DETERMINE LIKELIHOOD OF MATCH ⌇53

↓

IF MATCH IS LIKELY, IDENTIFY OR AUTHORIZE USER ⌇54

Figure 5

Figure 6

**Figure 6a**

**Figure 15**

```
┌──────────────────────────────────────────────────┐
│         SENSING A BIOMETRIC IMAGE                  │──67
└──────────────────────────────────────────────────┘
                        │
                        ▼
┌──────────────────────────────────────────────────┐
│ PROVIDING FEATURE LOCATIONS DERIVED FROM A         │
│ TEMPLATE STORED ON A SMARTCARD TO HOST PROCESSOR   │──68
└──────────────────────────────────────────────────┘
                        │
                        ▼
┌──────────────────────────────────────────────────┐
│      PREPROCESS IMAGE ON HOST PROCESSOR            │──69
└──────────────────────────────────────────────────┘
                        │
                        ▼
┌──────────────────────────────────────────────────┐
│   EXTRACT FEATURES FROM IMAGE ON HOST PROCESSOR    │──70
└──────────────────────────────────────────────────┘
                        │
                        ▼
┌──────────────────────────────────────────────────┐
│ ALIGN FEATURE LOCATIONS OF EXTRACTED FEATURES AND  │
│ THOSE PROVIDED FROM THE SMARTCARD TO ORIENT THE    │──71
│ SENSED IMAGE                                       │
└──────────────────────────────────────────────────┘
                        │
                        ▼
┌──────────────────────────────────────────────────┐
│ DETERMINING AT LEAST A PARAMETER ASSOCIATED WITH   │
│ EACH FEATURE A LOCATION OF WHICH IS PROVIDED FROM  │
│ THE SMARTCARD                                      │──72
└──────────────────────────────────────────────────┘
                        │
                        ▼
┌──────────────────────────────────────────────────┐
│ PROVIDING THE AT LEAST A PARAMETER IN A            │
│ PREDETERMINED ORDER TO THE SMARTCARD              │──73
└──────────────────────────────────────────────────┘
                        │
                        ▼
┌──────────────────────────────────────────────────┐
│ COMPARING THE RECEIVED AT LEAST A PARAMETER WITH   │
│ PARAMETERS STORED WITHIN THE TEMPLATE TO DETERMINE │──74
│ LIKELIHOOD OF MATCH                                │
└──────────────────────────────────────────────────┘
                        │
                        ▼
┌──────────────────────────────────────────────────┐
│  IF MATCH IS LIKELY, IDENTIFY OR AUTHORIZE USER    │──75
└──────────────────────────────────────────────────┘
```

Figure 7

SENSING A BIOMETRIC IMAGE 76

PROVIDING FEATURE LOCATIONS DERIVED FROM A TEMPLATE STORED ON A SMARTCARD TO HOST PROCESSOR AND SOME FALSE FEATURE LOCATIONS 77

PREPROCESS IMAGE ON HOST PROCESSOR 78

EXTRACT FEATURES FROM IMAGE ON HOST PROCESSOR 79

ALIGN FEATURE LOCATIONS OF EXTRACTED FEATURES AND THOSE PROVIDED FROM THE SMARTCARD TO ORIENT THE SENSED IMAGE IN A BEST MANNER 80

DETERMINING AT LEAST A PARAMETER ASSOCIATED WITH EACH FEATURE A LOCATION OF WHICH IS PROVIDED FROM THE SMARTCARD 81

PROVIDING THE AT LEAST A PARAMETER IN A PREDETERMINED ORDER TO THE SMARTCARD 82

COMPARING THE RECEIVED AT LEAST A PARAMETER WITH PARAMETERS STORED WITHIN THE TEMPLATE TO DETERMINE LIKELIHOOD OF MATCH 83

IF MATCH IS LIKELY, IDENTIFY OR AUTHORIZE USER 84

Figure 8

SENSING A BIOMETRIC IMAGE — 85

PROVIDING FEATURE LOCATIONS DERIVED FROM A TEMPLATE STORED ON A SMARTCARD TO HOST PROCESSOR AND SOME FALSE FEATURE LOCATIONS — 86

PREPROCESS IMAGE ON HOST PROCESSOR — 87

EXTRACT FEATURES FROM IMAGE ON HOST PROCESSOR — 88

ALIGN FEATURE LOCATIONS OF EXTRACTED FEATURES AND THOSE PROVIDED FROM THE SMARTCARD TO ORIENT THE SENSED IMAGE IN A BEST MANNER — 89

DETERMINING AT LEAST A PARAMETER ASSOCIATED WITH EACH FEATURE A LOCATION OF WHICH IS PROVIDED FROM THE SMARTCARD — 90

PROVIDING THE AT LEAST A PARAMETER IN A PREDETERMINED ORDER TO THE SMARTCARD, AT LEAST A PARAMETER INDICATIVE OF A FEATURE NOT BEING FOUND — 91

COMPARING THE RECEIVED AT LEAST A PARAMETER WITH PARAMETERS STORED WITHIN THE TEMPLATE ASSOCIATED WITH THE RECEIVED PIN TO DETERMINE LIKELIHOOD OF A MATCH — 92

IF MATCH IS LIKELY, IDENTIFY OR AUTHORIZE USER — 93

Figure 9

```
┌─────────────────────────────────────────┐
│        SENSING A BIOMETRIC IMAGE         │─── 94
└─────────────────────────────────────────┘
                     │
                     ▼
┌─────────────────────────────────────────┐
│  PROVIDING LOCATIONS BASED ON LOCATIONS OF FEATURES  │
│  WITHIN A PREVIOUSLY CAPTURED FINGERPRINT AND USEABLE │─── 95
│  FOR ALIGNING THE FINGERPRINT IN ONE OR MORE UNAMBIGUOUS │
│  ORIENTATIONS AND TRANSLATIONAL FASHIONS  │
└─────────────────────────────────────────┘
                     │
                     ▼
┌─────────────────────────────────────────┐
│   PREPROCESS IMAGE ON HOST PROCESSOR     │─── 96
└─────────────────────────────────────────┘
                     │
                     ▼
┌─────────────────────────────────────────┐
│  EXTRACT FEATURES FROM IMAGE ON HOST PROCESSOR  │─── 97
└─────────────────────────────────────────┘
                     │
                     ▼
┌─────────────────────────────────────────┐
│  ALIGN FEATURE LOCATIONS OF EXTRACTED FEATURES USING THE  │
│  PROVIDED LOCATIONS TO ORIENT THE SENSED IMAGE IN AT LEAST │─── 98
│  AN UNAMBIGUOUS MANNER                    │
└─────────────────────────────────────────┘
                     │
                     ▼
┌─────────────────────────────────────────┐
│  DETERMINING AT LEAST A PARAMETER ASSOCIATED WITH EACH FEATURE  │
│  A LOCATION OF WHICH IS PROVIDED FROM THE SMARTCARD  │
└─────────────────────────────────────────┘──── 99
                     │
                     ▼
┌─────────────────────────────────────────┐
│  PROVIDING THE AT LEAST A PARAMETER IN A  │
│  PREDETERMINED ORDER TO THE SMARTCARD     │─── 100
└─────────────────────────────────────────┘
                     │
                     ▼
┌─────────────────────────────────────────┐
│  COMPARING THE RECEIVED AT LEAST A PARAMETER WITH  │
│  PARAMETERS STORED WITHIN THE TEMPLATE TO DETERMINE │─── 101
│  LIKELIHOOD OF A MATCH                     │
└─────────────────────────────────────────┘
                     │
                     ▼
┌─────────────────────────────────────────┐
│  IF MATCH IS LIKELY, IDENTIFY OR AUTHORIZE USER  │─── 102
└─────────────────────────────────────────┘
```

**Figure 10**

```
┌─────────────────────────────────────────┐
│      SENSING A BIOMETRIC IMAGE           │  ~103
└─────────────────────────────────────────┘
                    │
                    ▼                                 104
┌─────────────────────────────────────────┐
│ PROVIDING LOCATIONS AND OFFSETS BASED    │
│ ON LOCATIONS OF FEATURES WITHIN A        │
│ PREVIOUSLY CAPTURED FINGERPRINT AND      │
│ USEABLE FOR ALIGNING THE FINGERPRINT IN  │
│ ONE OR MORE UNAMBIGUOUS ORIENTATIONS     │
│ AND TRANSLATIONAL FASHIONS               │
└─────────────────────────────────────────┘
                    │
                    ▼
┌─────────────────────────────────────────┐
│   PREPROCESS IMAGE ON HOST PROCESSOR     │  ~105
└─────────────────────────────────────────┘
                    │
                    ▼
┌─────────────────────────────────────────┐
│ EXTRACT FEATURES FROM IMAGE ON HOST      │  ~106
│ PROCESSOR                                │
└─────────────────────────────────────────┘
                    │
                    ▼
┌─────────────────────────────────────────┐
│ ALIGN FEATURE LOCATIONS OF EXTRACTED     │
│ FEATURES USING THE PROVIDED LOCATIONS    │  ~107
│ AND OFFSETS TO ORIENT THE SENSED IMAGE   │
│ IN AT LEAST AN UNAMBIGUOUS MANNER        │
└─────────────────────────────────────────┘
                    │
                    ▼
┌─────────────────────────────────────────┐
│ DETERMINING AT LEAST A PARAMETER         │
│ ASSOCIATED WITH EACH FEATURE A LOCATION  │  ~108
│ OF WHICH IS PROVIDED FROM THE SMARTCARD  │
└─────────────────────────────────────────┘
                    │
                    ▼
┌─────────────────────────────────────────┐
│ PROVIDING THE AT LEAST A PARAMETER IN A  │  ~109
│ PREDETERMINED ORDER TO THE SMARTCARD     │
└─────────────────────────────────────────┘
                    │
                    ▼
┌─────────────────────────────────────────┐
│ COMPARING THE RECEIVED AT LEAST A        │
│ PARAMETER WITH PARAMETERS STORED WITHIN  │  ~110
│ THE TEMPLATE TO DETERMINE LIKELIHOOD     │
│ OF MATCH                                 │
└─────────────────────────────────────────┘
                    │
                    ▼
┌─────────────────────────────────────────┐
│ IF MATCH IS LIKELY, IDENTIFY OR          │  ~111
│ AUTHORIZE USER                           │
└─────────────────────────────────────────┘
```

**Figure 11**

| | |
|---|---|
| SENSING A BIOMETRIC IMAGE | 112 |
| PREPROCESS IMAGE ON HOST PROCESSOR | 113 |
| EXTRACT FEATURES FROM IMAGE ON HOST PROCESSOR | 114 |
| PROVIDE FEATURE DATA TO SMART CARD | 115 |
| ON SMART CARD TRANSFORM FEATURE DATA | 116 |
| PROVIDE TRANSFORMED FEATURE DATA & LOCATIONS TO HOST | 117 |
| ALIGN TRANSFORMED FEATURE LOCATIONS USING THE PROVIDED LOCATIONS TO ORIENT THE SENSED IMAGE IN AT LEAST AN UNAMBIGUOUS MANNER | 118 |
| DETERMINING AT LEAST A PARAMETER ASSOCIATED WITH EACH FEATURE A LOCATION OF WHICH IS PROVIDED FROM THE SMARTCARD | 119 |
| PROVIDING THE AT LEAST A PARAMETER IN A PREDETERMINED ORDER TO THE SMARTCARD | 120 |
| COMPARING THE RECEIVED AT LEAST A PARAMETER WITH PARAMETERS STORED WITHIN THE TEMPLATE TO DETERMINE LIKELIHOOD OF MATCH | 121 |
| IF MATCH IS LIKELY, IDENTIFY OR AUTHORIZE USER | 122 |

**Figure 12**

Figure 13

880

860

840

824

1122

1120

Figure 14

772

774

775

776

778

780

782

784

**EP 1 385 118 B1**

**Patent documents cited in the description**

- WO 0111577 A

- WO 0184494 A